(19) Europäisches Patentamt
European Patent Office
Office européen des brevets

(11)   **EP 1 664 158 B1**

(12)   **EUROPÄISCHE PATENTSCHRIFT**

(45) Veröffentlichungstag und Bekanntmachung des Hinweises auf die Patenterteilung:
**01.05.2019   Patentblatt 2019/18**

(51) Int Cl.:
***C08J 3/24*** *(2006.01)*

(21) Anmeldenummer: **04766849.6**

(22) Anmeldetag: **23.09.2004**

(86) Internationale Anmeldenummer:
**PCT/EP2004/052294**

(87) Internationale Veröffentlichungsnummer:
**WO 2005/033186 (14.04.2005 Gazette 2005/15)**

(54) **MIKROGELE IN VERNETZBAREN, ORGANISCHEN MEDIEN**

MICROGELS IN CROSS-LINKABLE, ORGANIC MEDIA

MICROGELS EN MILIEUX ORGANIQUES RETICULABLES

(84) Benannte Vertragsstaaten:
**AT BE BG CH CY CZ DE DK EE ES FI FR GB GR HU IE IT LI LU MC NL PL PT RO SE SI SK TR**

(30) Priorität: **27.09.2003   DE 10344976**

(43) Veröffentlichungstag der Anmeldung:
**07.06.2006   Patentblatt 2006/23**

(73) Patentinhaber: **ARLANXEO Deutschland GmbH 41540 Dormagen (DE)**

(72) Erfinder:
• **ZISER, Torsten**
  **69488 Birkenau (DE)**
• **FRÜH, Thomas**
  **67117 Limburgerhof (DE)**
• **HEILIGER, Ludger**
  **67433 Neustadt (DE)**
• **OBRECHT, Werner**
  **47447 Moers (DE)**

(56) Entgegenhaltungen:
**EP-A- 1 279 702     US-A- 5 229 434
US-B1- 6 423 760**

EP 1 664 158 B1

**Beschreibung**

Die Erfindung betrifft ein Verfahren zur Herstellung von Mikrogel-enthaltenden Polymerzusammensetzungen, welche das Mischen mindestens eines vernetzbaren, organischen Mediums (A), welches bei einer Temperatur von 120°C eine Viskosität von weniger als 30000 mPas aufweist, und mindestens ein Mikrogels (B), das nicht durch elektromagnetische Strahlung einer Wellenlänge von weniger als 0,1 $\mu$m vernetzt ist, und dadurch gekennzeichnet, dass die Primärpartikel des Mikrogels (B) eine durchschnittliche Teilchengröße des Mikrogels (B) von weniger als 99 nm aufweisen und dass die Mikrogele (B) in Toluol bei 23°C unlösliche Anteile von mindestens 90 Gew.-% aufweisen zu einer Zusammensetzung, enthaltend (A) und (B), die anschließende Zugabe eines Vernetzungsmittels (C) für das vernetzbare Medium (A) und das anschließende Vernetzen der Zusammensetzung umfasst..

Es ist bekannt, Kautschukgele, auch modifizierte Kautschukgele, in Abmischungen mit verschiedensten Kautschuken einzusetzen, um beispielsweise den Rollwiderstand bei der Herstellung von KFZ-Reifen zu verbessern (siehe z.B. DE 42 20 563, GB-PS 10 78 400 EP 405 216 und EP 854 171). Hierbei werden die Kautschukgele immer in feste Matrices eingearbeitet.

Bekannt ist auch Druckfarbenpigmente in dafür geeigneten flüssigen Medien fein verteilt einzuarbeiten, um letztendlich Druckfarben herzustellen (siehe z. B. EP 0 953 615 A2, EP 0 953 615 A3). Hierbei werden Teilchengrößen von bis zu 100 nm erreicht.

Für die Dispergierung können verschiedene Dispergierapparate wie Perlmühle, Dreiwalze oder Homogenisator verwendet werden. Die Verwendung von Homogenisatoren sowie deren Funktionsweise ist beschrieben im Marketing Bulletin der Fa. APV Homogeniser Group - "High-pressure homogenisers processes, product and applications" von William D. Pandolfe und Peder Baekgaard, hauptsächlich für die Homogenisierung von Emulsionen.

Nicht beschrieben in den genannten Dokumenten wird der Einsatz von Kautschukgelen als Feststoffkomponente in Mischungen mit vernetzbaren organischen Medien bestimmter Viskosität mit dem Ziel, feinstverteilte Kautschukgeldispersionen mit Teilchendurchmessern deutlich unter einem $\mu$m herzustellen sowie deren Homogenisierung mittels eines Homogenisators.

In Chinese Journal of Polymer Science, Band 20, Nr. 2, (2002), 93 - 98, werden durch energiereiche Strahlung vollständig vernetzte Mikrogele und ihre Verwendung zur Erhöhung der Schlagzähigkeit von Kunststoffen beschrieben. Bei der Herstellung spezieller Epoxyharzzusammensetzungen tritt intermediär eine Mischung aus einem strahlenvernetzten carboxylendgestoppten Nitril-Butadien-Mikrogel und dem Diglycidylether von Bisphenol A auf. Weitere flüssige Mikrogel-enthaltende Zusammensetzungen werden nicht beschrieben.

Ähnlich offenbart die US 20030088036 A1 verstärkte wärmehärtende Harzzusammensetzungen, bei deren Herstellung ebenfalls strahlenvernetzte Mikrogelpartikel mit wärmehärtenden Prepolymeren vermischt werden (s. a. EP 1262510 A1).

In diesen Druckschriften wird als bevorzugte Strahlungsquelle zur Herstellung der Mikrogelpartikel eine radioaktive Cobaltquelle erwähnt.

Durch den Einsatz der Strahlenvernetzung werden sehr homogen vernetzte Mikrogel-Partikel erhalten. Nachteilig ist an dieser Art der Vernetzung jedoch insbesondere, dass eine Übertragung dieses Verfahrens aus dem Labormaßstab in eine großtechnische Anlage sowohl unter ökonomischen Gesichtspunkten als auch unter Arbeitssicherheitsaspekten nicht realistisch ist. Nicht durch energiereiche Strahlung vernetzte Mikrogele werden in den genannten Druckschriften nicht verwendet. Weiterhin ist bei der Verwendung vollständig strahlenvernetzter Mikrogele die Moduländerung von der Matrixphase zur dispergierten Phase unmittelbar. Hierdurch kann es bei schlagartiger Beanspruchung zu Abrißeffekten zwischen Matrix und dispergierter Phase kommen, wodurch die mechanischen Eigenschaften, das Quellverhalten und die Spannungsrisskorrosion etc. beeinträchtigt werden.

Hinweise auf die Verwendung nicht durch energiereiche Strahlung vernetzter Mikrogele finden sich in den genannten Druckschriften nicht.

Aus den DE 2910153 und DE 2910168 sind Dispersionen von Kautschukteilchen mit Monomeren bekannt. Diese werden durch Versetzen eines wässrigen Kautschuk-Latex mit den Monomeren unter Zusatz eines Dispergators hergestellt. Zwar erwähnen diese Schriften auch die Möglichkeit, dass aus dem Latex resultierende Wasser zu entfernen. Wasserfreie Dispersionen werden jedoch nicht beschrieben. Dispersionen, die wasserfrei sind, können nach diesem Verfahren praktisch nicht erhalten werden (s. a. die Würdigung in der DE-A-3742180, Seite 2, Zeile 10, des selben Anmelders). Dies ist jedoch bei zahlreichen Anwendungen nachteilig. Weiterhin enthalten die in den genannten Patenten beschriebenen Dispersionen zwingend Dispergatoren bzw. Emulgatoren um eine homogene Verteilung der wässrigen und der organischen Phasen zu erzielen. Die Anwesenheit solcher Emulgatoren bzw. Dispergatoren ist jedoch in vielen Anwendungen sehr störend. Außerdem sind die dort beschriebenen KautschukPartikel relativ grobteilig.

Die EP 1 279 702 A1 betrifft ein vollständig vulkanisiertes thermoplastisches Elastomer, das eine Kautschukphase aufweist, deren durchschnittliche Teilchengröße 0,02 bis etwa 1 $\mu$m beträgt.

Die US 5,229,434 schlägt härtbare Harzzusammensetzungen vor, die Mikrogele enthalten. Die härtbaren Harzzusammensetzungen sind insbesondere photohärtbare Harzzusammensetzungen, die im Wege der Photopolymerisation, insbesondere mittels UV-Strahlen und Elektronenstrahlen, gegebenenfalls unter Zuhilfenahme diverser Photopolymerisationsinitiatoren, gehärtet werden.

Aus der US 6,423,760 B1 ist ein vollständig vulkanisierter, pulverförmiger Kautschuk bekannt, der mithilfe von Strahlung vulkanisiert wird, einen Gelgehalt von 60 Gewichts-% oder mehr und eine durchschnittliche Teilchengröße von 20 bis 2000 nm, wobei jedes Teilchen homogen ist, aufweist, und keinen pulverförmigen Silikonkautschuk enthält.

Die US 4,268,547 beschreibt Beschichtungs-Zusammensetzungen, die neben einem vernetzbaren Polyester (A) auch "Mikrogele" (C) enthalten und letztlich vernetzt werden. Die "Mikrogele" in US 4,268,547 sind unvollständig vernetzt, nämlich gerade so viel, dass der Grad an Vernetzung nicht Größer als notwendig ist, damit das Polymer unlöslich ist. (siehe col. 3, line 10-12). Die "Mikrogele" der US 4,268,547 enthalten lösliche (unvergelte) Anteile von über 50%.

In US 4,115,472 werden ebenfalls Beschichtungszusammensetzungen beschrieben, die neben einem vernetzbaren Polymer auch ein Mikrogel, jedoch von erheblicher Größe von 0.1 bis 10 $\mu$m (= 100 bis 10.000 nm; siehe col. 11, line 26 - 29), enthalten.

In US 4,055,607 findet sich eine hohe Teilchengrößenbereich von 1 bis 40 $\mu$m (also 1000 bis 40.000 nm; siehe col. 4, line 51 - 55).

Ebenfalls findet sich eine hohe Teilchengrößenbereich in US 4,025,474 mit 0.1 bis 10 $\mu$m (also 100 bis 10.000 nm; siehe col. 7, line 48 - 51).

Die Erfinder der vorliegenden Erfindung fanden nun, dass es möglich ist, nicht durch energiereiche Strahlung vernetzte Mikrogele in vernetzbaren, organischen Medien bestimmter Viskosität beispielsweise mit einem Homogenisator fein zu verteilen. Die Zerteilung der Mikrogele in dem vernetzbaren, organischen Medium bis in den Primärpartikelbereich ist beispielsweise eine Voraussetzung, um die Nanoeigenschaften der Mikrogele in jedweden Verwendungen, beispielsweise bei der Einarbeitung in Kunststoffen, insbesondere reproduzierbar nutzbar zu machen. Durch die feine Dispergierung gelingt eine reproduzierbare Einstellung kritischer anwendungstechnischer Eigenschaften. Die offenbarten, die speziellen Mikrogele und vernetzbare, organische Medien, enthaltenden Zusammensetzungen können eine Vielzahl neuer Anwendungen von Mikrogelen erschließen, die mit den Mikrogelen selbst bislang nicht zugänglich waren.

So eröffnen die mikrogelhaltigen Flüssigkeiten neue Applikationsmöglichkeiten wie z. B. Gießen, Spritzen, Beschichten, die den flüssigen Zustand als Voraussetzung haben.

Durch Polymerisation der offenbarten, vernetzbare organische Medien und Mikrogel, enthaltenden Zusammensetzungen können aufgrund der erzielbaren feinen Verteilungen beispielsweise Kunststoffe mit völlig neuen Eigenschaften erhalten werden. Die offenbarten Mikrogel-enthaltenden Zusammensetzungen können auf einer Vielzahl von Gebieten Anwendung finden, wie z.B. in elastomeren PU-Systemen (Kaltgießsysteme und Heißgießsysteme).

In den in den erfindungsgemäßen Verfahren hergestellten Mikrogel-enthaltenden Polymerzusammensetzungen bilden an sich unverträgliche Materialien überraschend eine homogene Verteilung, die auch bei längerer Lagerung (6 Monate) stabil bleibt.

P. Pötschke et al., Kautschuk Gummi Kunststoffe, 50 (11) (1997) 787 zeigen, dass bei unverträglichen Materialien wie z.B. p-Phenylendiamin-Derivat als dispergierte Phase und TPU als umgebender Phase keine Domänen kleiner als 1,5 $\mu$m realisiert werden können. Es ist überraschend, dass mit den Mikrogelen der vorliegenden Erfindung derartig kleine dispergierte Phasen erreicht werden, die die Größe der Primärpartikel (< 100 nm) besitzen.

Es wurden weiterhin Mikrogel-haltige Zusammensetzungen vernetzbarer Medien gefunden, für die unterschiedlichstes rheologisches Verhalten festgestellt wurde. In geeigneten Mikrogel-haltigen Zusammensetzungen wurde überraschenderweise eine sehr starke Strukturviskosität oder Thixotropie gefunden. Dies kann genutzt werden, um neben anderen Eigenschaften, das Fließverhalten von beliebigen flüssigen, vernetzbaren Zusammensetzungen durch Mikrogele gezielt zu steuern. Dies kann beispielsweise vorteilhaft ausgenutzt werden bei Füllstoff-haltigen Zusammensetzungen, die zum Sedimentieren neigen. Weiterhin wurde überraschenderweise in aus den erfindungsgemäßen Verfahren hergestellten Mikrogel-haltigen Polymerzusammensetzungen hergestellten Kunststoffen eine verbesserte Weiterreißfestigkeit und eine erhöhte Verstärkung, ausgedrückt als das Verhältnis der Spannungswerte bei 300% und 100% Dehnung, festgestellt. Weiterhin kann durch die Wahl der Mikrogel-Glastemperatur die Härte der resultierenden Polymerzusammensetzungen eingestellt werden.

Die vorliegende Erfindung stellt somit ein Verfahren zur Herstellung von Mikrogel-enthaltenden Polymerzusammensetzung bereit, welches das Mischen mindestens eines vernetzbaren, organischen Mediums (A), welches bei einer Temperatur von 120°C eine Viskosität von weniger als 30000 mPas aufweist, und mindestens eines Mikrogels (B), das nicht durch elektromagnetische Strahlung einer Wellenlänge von weniger als 0,1 $\mu$m vernetzt ist, und dadurch gekennzeichnet, dass die Primärpartikel des Mikrogels (B) eine durchschnittliche Teilchengröße des Mikrogels (B) von weniger als 99 nm aufweisen und dass die Mikrogele (B) in Toluol bei 23°C unlösliche Anteile von mindestens 90 Gew.-% aufweisen zu einer Zusammensetzung, enthaltend (A) und (B), die anschließende Zugabe eines Vernetzungsmittels (C) für das vernetzbare Medium (A) und das anschließende Vernetzen der Zusammensetzung umfasst.

Bevorzugt ist die Viskosität des vernetzbaren, organischen Mediums (A) bei einer Temperatur von 120°C weniger als 10000 mPas.

Bevorzugter ist die Viskosität des vernetzbaren, organischen Mediums (A) bei einer Temperatur von 120°C weniger als 1000 mPas.

Noch bevorzugter ist die Viskosität des vernetzbaren, organischen Mediums (A) weniger als 750 mPas bei einer Temperatur von 120°C, noch bevorzugter weniger als 500 mPas bei einer Temperatur von 120°C.

Die Viskosität des vernetzbaren, organischen Mediums (A) wird bei einer Drehzahl von 5 s$^{-1}$ mit einem Kegel-Platte-Meßsystem nach DIN 53018 bei 120°C bestimmt.

Mikrogele (B)

Das in dem erfindungsgemäßen Verfahren verwendete Mikrogel (B) ist ein nicht durch elektromagnetische Strahlung einer Wellenlänge von weniger als 0,1 $\mu$m vernetztes Mikrogel.

Die Verwendung von durch elektromagnetische Strahlung einer Wellenlänge von weniger als 0,1 $\mu$m vollständig homogen vernetzten Mikrogelen ist nachteilig, weil sie im großtechnischen Maßstab praktisch nicht durchführbar ist und Probleme der Arbeitssicherheit aufwirft. Weiterhin kommt es in Zusammensetzungen, die unter Verwendung von durch elektromagnetische Strahlung einer Wellenlänge von weniger als 0,1 $\mu$m vollständig homogen vernetzter Mikrogelen hergestellt wurden, bei schlagartiger Beanspruchung zu Abreißeffekten zwischen Matrix und dispergierter Phase, wodurch die mechanischen Eigenschaften, das Quellverhalten und die Spannungsrisskorrosion etc. beeinträchtigt werden.

In einer bevorzugten Ausführungsform der Erfindung weisen die Primärpartikel des Mikrogels (B) eine annähernd kugelförmige Geometrie auf. Als Primärpartikel werden nach DIN 53206:1992-08 die durch geeignete physikalische Verfahren (Elektronenmikroskop), als Individuen erkennbare, in der kohärenten Phase dispergierten Mikrogelteilchen bezeichnet (Vgl. z.B. Römpp Lexikon, Lacke und Druckfarben, Georg Thieme Verlag, 1998). Eine "annähernd kugelförmige" Geometrie bedeutet, dass die dispergierten Primärpartikel der Mikrogele bei der Ansicht der Zusammensetzung, beispielsweise mit einem Elektronenmikroskop, erkennbar im wesentlichen eine kreisförmige Fläche abbilden. Da die Mikrogele bei der Vernetzung des vernetzbaren organischen Mediums (A) ihre Form im wesentlichen nicht verändern, gelten die vorstehenden und nachstehenden Ausführungen in gleicher Weise auch für die durch Vernetzung der offenbarten Zusammensetzung erhaltenen mikrogel-enthaltenden Zusammensetzungen.

In den in den erfindungsgemäßen Verfahren hergestellten Polymerzusammensetzungen enthaltenen Primärpartikeln des Mikrogels (B) beträgt die Abweichung der Durchmesser eines einzelnen Primärpartikels, definiert als

$$[(d1 - d2) / d2] \times 100,$$

worin d1 und d2 zwei beliebige Durchmesser des Primärpartikels sind und d1 > d2 ist, bevorzugt weniger als 250 %, bevorzugter weniger als 200 %, noch bevorzugter weniger als 100 %, noch bevorzugter weniger als 80 %, noch bevorzugter weniger als 50%.

Bevorzugt weisen mindestens 80 %, bevorzugter mindestens 90 %, noch bevorzugter mindestens 95% der Primärpartikel des Mikrogels eine Abweichung der Durchmesser, definiert als

$$[ (d1 - d2) / d2] \times 100,$$

worin d1 und d2 zwei beliebige Durchmesser des Primärpartikels sind und d1 > d2 ist, von weniger als 250 %, bevorzugter weniger als 200 %, noch bevorzugter weniger als 100 % auf, noch bevorzugter weniger als 80 %, noch bevorzugter weniger als 50%.

Die vorstehend erwähnte Abweichung der Durchmesser der einzelnen Partikel wird nach folgendem Verfahren bestimmt. Zunächst wird wie in den Beispielen beschrieben ein Dünnschnitt der offenbarten Zusammensetzung hergestellt. Dann wird eine transmissionselektronen-mikroskopische Aufnahme bei einer Vergrößerung von beispielsweise 10.000fach oder 200.000fach hergestellt. In einer Fläche von 833,7 nm x 828,8 nm wird manuell an 10 Mikrogel-Primärpartikeln der größte und der kleinste Durchmesser als d1 und d2 bestimmt. Liegt die oben definierte Abweichung bei mindestens 80 %, bevorzugter mindestens 90 %, noch bevorzugter mindestens 95% der vermessenen Mikrogel-Primärpartikeln jeweils unter 250 %, bevorzugter unter 100 %, noch bevorzugter weniger als 80 %, noch bevorzugter unter 50 %, so weisen die Mikrogel-Primärpartikeln das oben definierte Merkmal der Abweichung auf.

Liegt in der Zusammensetzung die Konzentration der Mikrogele so hoch, dass eine starke Überlagerung der sichtbaren Mikrogel-Primärpartikel erfolgt, kann die Auswertbarkeit durch vorheriges, geeignetes Verdünnen der Messprobe verbessert werden. In den in den erfindungsgemäßen Verfahren hergestellten Polymerzusammensetzungen weisen die Primärpartikel des Mikrogels (B) einen durchschnittlichen Teilchendurchmesser von 20 bis 99 nm, noch bevorzugter 40 bis 80 nm auf (Durchmesserangaben nach DIN 53206). Die Herstellung besonders feinteiliger Mikrogele durch Emulsionspolymerisation erfolgt durch Steuerung der Reaktionsparameter in an sich bekannter Weise (s. z.B.

H.G. Elias, Makromoleküle, Band 2, Technologie, 5. Auflage, 1992, Seite 99 ff).

Da sich die Morphologie der Mikrogele bei der Polymerisation bzw. Vernetzung der offenbarten Zusammensetzung im wesentlichen nicht verändert, entspricht der durchschnittliche Teilchendurchmesser der dispergierten Primärpartikel im wesentlichen dem durchschnittlichen Teilchendurchmesser der dispergierten Primärpartikel in der durch Polymerisation bzw. Vernetzung erhaltenen Zusammensetzung.

In den erfindungsgemäßen Verfahren weisen die Mikrogele (B) in Toluol bei 23°C unlösliche Anteile (Gelgehalt) von mindestens 90 Gew.-% auf. Der in Toluol unlösliche Anteil wird dabei in Toluol bei 23°C bestimmt. Hierbei werden 250 mg des Mikrogels in 20 ml Toluol 24 Stunden unter Schütteln bei 23°C gequollen. Nach Zentrifugation mit 20.000 Upm wird der unlösliche Anteil abgetrennt und getrocknet. Der Gelgehalt ergibt sich aus dem Quotienten des getrockneten Rückstandes und der Einwaage und wird in Gewichtsprozent angegeben.

In den in den erfindungsgemäßen Verfahren hergestellten Polymerzusammensetzungen weisen die Mikrogele (B) zweckmäßig in Toluol bei 23°C einen Quellungsindex von weniger als etwa 80, bevorzugter von weniger als 60, noch bevorzugter von weniger als 40 auf. So können die Quellungsindizes der Mikrogele (Qi) besonders bevorzugt zwischen 1 - 15 und 1-10 liegen. Der Quellungsindex wird aus dem Gewicht des in Toluol bei 23°C für 24 Stunden gequollenen, lösungsmittelhaltigen Mikrogels (nach Zentrifugation mit 20.000 Upm) und dem Gewicht des trockenen Mikrogels berechnet:

$$Qi = \text{Naßgewicht des Mikrogels / Trockengewicht des Mikrogels.}$$

Zur Ermittlung des Quellungsindex läßt man 250 mg des Mikrogels in 25 ml Toluol 24 h unter Schütteln quellen. Das Gel wird abzentrifugiert und feucht gewogen und anschließend bei 70 °C bis zur Gewichtskonstanz getrocknet und nochmals gewogen.

In den in den erfindungsgemäßen Verfahren hergestellten Polymerzusammensetzungen weisen die Mikrogele (B) zweckmäßig Glastemperaturen Tg von -100°C bis +120°C, bevorzugter von -100°C bis +100°C, noch bevorzugter von -80°C bis +80 °C auf. In seltenen Fällen können auch Mikrogele verwendet werden, die aufgrund ihres hohen Vernetzungsgrades keine Glastemperatur aufweisen.

Glastemperaturen der Mikrogele (B) unterhalb von Raumtemperatur (20°) sind insbesondere vorteilhaft, um in mikrogelhaltigen Polymerzusammensetzungen die Weitereißfestigkeit und die Härte weitestgehend unbeeinflusst zu lassen, wohingegen die Rheologie der zu polymerisierenden Zusammensetzungen in gewünschter Weise beeinflusst wird.

Glastemperaturen der Mikrogele (B) oberhalb von Raumtemperatur (20°) sind vorteilhaft, um in mikrogelhaltigen Polymerzusammensetzungen eine Erhöhung der Härte, eine größere Verstärkung, eine verbesserte Weiterreißfestigkeit zu erzielen und die Rheologie der zu polymerisierenden Zusammensetzungen in gewünschter Weise zu beeinflussen.

Weiterhin weisen die in den in den erfindungsgemäßen Verfahren hergestellten Polymerzusammensetzungen eingesetzten Mikrogele (B) zweckmäßig eine Breite des Glasübergangs von größer als 5 °C, bevorzugt größer als 10°C, bevorzugter größer als 20 °C auf. Mikrogele, die eine solche Breite des Glasübergangs aufweisen, sind in der Regel - im Gegensatz zu vollständig homogen strahlenvernetzten Mikrogelen - nicht vollständig homogen vernetzt. Dies führt dazu, dass die Moduländerung von der Matrixphase zur dispergierten Phase in den aus den in den erfindungsgemäßen Verfahren hergestellten Polymerzusammensetzungen hergestellten vernetzbaren bzw. polymerisierten Zusammensetzungen nicht unmittelbar ist. Hierdurch kommt es bei schlagartiger Beanspruchung dieser Zusammensetzungen nicht zu Abreißeffekten zwischen Matrix und dispergierter Phase, wodurch die mechanischen Eigenschaften, das Quellverhalten und die Spannungsrisskorrosion etc. vorteilhaft beeinflusst werden.

Die Bestimmung der Glasübergangstemperaturen (Tg) und der Breite des Glasübergangs (ΔTg) der Mikrogele erfolgt durch Differentialthermoanalyse (DTA, engl. DSC) unter folgenden Bedingungen: Für die Bestimmung von Tg und ΔTg werden zwei Abkühl-/Aufheizzyklen durchgeführt. Tg und ΔTg werden im zweiten Aufheizzyklus bestimmt. Für die Bestimmungen werden 10-12 mg des ausgewählten Mikrogels in einem DSC-Probenbehälter (Standard-Aluminium-Pfanne) von Perkin-Elmer eingesetzt. Der erste DSC-Zyklus wird durchgeführt, indem die Probe zuerst mit flüssigem Stickstoff auf -100°C abgekühlt und dann mit einer Geschwindigkeit von 20K/min auf +150°C aufgeheizt wird. Der zweite DSC-Zyklus wird durch sofortige Abkühlung der Probe begonnen, sobald eine Probentemperatur von +150°C erreicht ist. Die Abkühlung erfolgt mit einer Geschwindigkeit von ungefähr 320 K/min. Im zweiten Aufheizzyklus wird die Probe wie im ersten Zyklus noch einmal auf +150°C aufgeheizt. Die Aufheizgeschwindigkeit im zweiten Zyklus ist erneut 20K/min. Tg und ΔTg werden graphisch an der DSC-Kurve des zweiten Aufheizvorgangs bestimmt. Für diesen Zweck werden an die DSC-Kurve drei Geraden angelegt. Die 1. Gerade wird am Kurventeil der DSC-Kurve unterhalb Tg, die 2. Gerade an dem durch Tg verlaufenden Kurvenast mit Wendepunkt und die 3. Gerade an dem Kurvenast der DSC- Kurve oberhalb Tg angelegt. Auf diese Weise werden drei Geraden mit zwei Schnittpunkten erhalten. Beide Schnittpunkte sind jeweils durch eine charakteristische Temperatur gekennzeichnet. Die Glastemperatur Tg erhält man als Mittelwert dieser beiden Temperaturen und die Breite des Glasübergangs ΔTg erhält man aus der Differenz der beiden Temperaturen.

Die in den erfindungsgemäßen Verfahren enthaltenen, nicht durch elektromagnetische Strahlung einer Wellenlänge von weniger als 0,1 μm vernetzten Mikrogele (B), die bevorzugt auf der Basis von Homopolymeren oder statistischen Copolymeren sind, können in an sich bekannter Weise hergestellt werden (s. zum Beispiel EP-A- 405 216, EP-A-854171, DE-A 4220563, GB-PS 1078400, DE 197 01 489.5, DE 197 01 488.7, DE 198 34 804.5, DE 198 34 803.7, DE 198 34 802.9, DE 199 29 347.3, DE 199 39 865.8, DE 199 42 620.1, DE 199 42 614.7, DE 100 21 070.8, DE 100 38 488.9, DE 100 39 749.2, DE 100 52 287.4, DE 100 56 311.2 und DE 100 61 174.5). In den Patent(anmeldungen) EP-A 405 216, DE-A 4220563 sowie in GB-PS 1078400 wird die Verwendung von CR-, BR-und NBR-Mikrogelen in Mischungen mit doppelbindungshaltigen Kautschuken beansprucht. In DE 197 01 489.5 wird die Verwendung von nachträglich modifizierten Mikrogelen in Mischungen mit doppelbindungshaltigen Kautschuken wie NR, SBR und BR beschrieben.

Unter Mikrogelen werden zweckmäßig Kautschukpartikel verstanden, die insbesondere durch Vernetzung folgender Kautschuke erhalten werden:

| | |
|---|---|
| BR: | Polybutadien, |
| ABR: | Butadien/Acrylsäure-C1-4Alkylestercopolymere, |
| IR: | Polyisopren, |
| SBR: | Styrol-Butadien-Copolymerisate mit Styrolgehalten von 1-90, vorzugsweise 5-50 Gewichtsprozent, |
| X-SBR: | carboxylierte Styrol-Butadien-Copolymerisate |
| FKM: | Fluorkautschuk, |
| ACM: | Acrylatkautschuk, |
| NBR: | Polybutadien-Acrylnitril-Copolymerisate mit Acrylnitrilgehalten von 5-60, vorzugsweise 10-50 Gewichtsprozent, |
| X-NBR: | carboxlierte Nitrilkautschuke |
| CR: | Polychloropren |
| IIR: | Isobutylen/Isopren-Copolymerisate mit Isoprengehalten von 0,5-10 Gewichtsprozent, |
| BIIR: | bromierte Isobutylen/Isopren-Copolymerisate mit Bromgehalten von 0,1-10 Gewichtsprozent, |
| CIIR: | chlorierte Isobutylen/Isopren-Copolymerisate mit Bromgehalten von 0,1-10 Gewichtsprozent, |
| HNBR: | teil- und vollhydrierte Nitrilkautschuke |
| EPDM: | Ethylen-Propylen-Dien-Copolymerisate, |
| EAM: | Ethylen/Acrylatcopolymere, |
| EVM: | Ethylen/Vinylacetatcopolymere |
| CO und ECO: | Epichlorhydrinkautschuke, |
| Q: | Silikonkautschuke, |
| AU: | Polyesterurethanpolymerisate, |
| EU: | Polyetherurethanpolymerisate |
| ENR: | Epoxydierter Naturkautschuk oder Mischungen davon. |

Die Herstellung der unvernetzten Mikrogel-Ausgangsprodukte erfolgt zweckmäßig durch folgende Methoden:

1. Emulsionspolymerisation
2. Lösungspolymerisation von Kautschuken, die über Variante 1 nicht zugänglich sind,
3. Außerdem können natürlich vorkommende Latices wie z.B. Naturkautschuklatex eingesetzt werden.

In den in den erfindungsgemäßen Verfahren hergestellten Polymerzusammensetzungen sind die verwendeten Mikrogele (B) bevorzugt solche, die durch Emulsionspolymerisation und Vernetzung erhältlich sind.

Bei der Herstellung der erfindungsgemäß verwendeten Mikrogele durch Emulsionspolymerisation werden beispielsweise folgende, radikalisch polymerisierbare Monomere eingesetzt: Butadien, Styrol, Acrylnitril, Isopren, Ester der Acryl- und Methacrylsäure. Tetrafluorethylen, Vinylidenfluord, Hexafluorpropen, 2-Chlorbutadien, 2,3-Dichlorbutadien sowie doppelbindungshaltige Carbonsäuren wie z.B. Acrylsäure, Methacrylsäure, Maleinsäure, Itakonsäure etc., doppelbindungshaltige Hydroxyverbindungen wie z.B. Hydroxyethylmethacrylat, Hydroxyethylacrylat, Hydroxybutylmethacrylat, Aminfunktionalisierte (Meth)acrylate, Acrolein, N-Vinyl-2-pyrollidon, N-Allyl-Harnstoff und N-Allyl-Thioharnstoff sowie sekundäre Amino-(meth)-acrylsäureester wie 2-tert-Butylaminoethylmethacrylat und 2-tert-Butylaminoethylmethacrylamid etc. Die Vernetzung des Kautschukgels kann direkt während der Emulsionspolymerisation, wie durch Copolymerisation mit vernetzend wirkenden multifunktionellen Verbindungen oder durch anschließende Vernetzung wie untenstehend beschrieben erreicht werden. Die Verwendung von direkt vernetzten Mikrogelen stellt eine bevorzugte Ausführungsform der Erfindung dar.

Bevorzugte multifunktionelle Comonomere sind Verbindungen mit mindestens zwei, vorzugsweise 2 bis 4 copolymerisierbaren C=C-Doppelbindungen, wie Diisopropenylbenzol, Divinylbenzol, Divinylether, Divinylsulfon, Diallylphthalat, Triallylcyanurat, Triallylisocyanurat, 1,2-Polybutadien, N,N'-m-Phenylenmaleimid, 2,4-Toluylenbis(maleimid) und/oder Triallyltrimellitat. Darüber hinaus kommen in Betracht die Acrylate und Methacrylate von mehrwertigen, vorzugsweise 2- bis 4-wertigen C2 bis C10 Alkoholen, wie Ethylenglykol, Propandiol-1,2, Butandiol, Hexandiol, Polyethylenglykol mit 2 bis 20, vorzugsweise 2 bis 8 Oxyethyleneinheiten, Neopentylglykol, Bisphenol-A, Glycerin, Trimethylolpropan, Pentaerythrit, Sorbit mit ungesättigten Polyestern aus aliphatischen Di- und Polyolen sowie Maleinsäure, Fumarsäure, und/oder Itaconsäure.

Die Vernetzung zu Kautschuk-Mikrogelen während der Emulsionspolymerisation kann auch durch Fortführung der Polymerisation bis zu hohen Umsätzen oder im Monomerzulaufverfahren durch Polymerisation mit hohen internen Umsätzen erfolgen. Eine andere Möglichkeit besteht auch in der Durchführung der Emulsionspolymerisation in Abwesenheit von Reglern.

Für die Vernetzung der unvernetzten oder der schwach vernetzten Mikrogel-Ausgangsprodukte im Anschluß an die Emulsionspolymerisation setzt man am besten die Latices ein, die bei der Emulsionspolymerisation erhalten werden. Prinzipiell kann diese Methode auch bei nichtwässrigen Polymerdispersionen angewandt werden, die auf andere Weise wie z.B. durch Umlösung zugänglich sind. Auch Naturkautschuklatices können auf diese Weise vernetzt werden.

Geeignete, vernetzend wirkende Chemikalien sind beispielsweise organische Peroxide, wie Dicumylperoxid, t-Butylcumylperoxid, Bis-(t-butyl-peroxy-isopropyl)benzol, Di-t-butylperoxid, 2,5-Dimethylhexan-2,5-dihydroperoxid, 2,5-Dimethylhexin-3,2,5-dihydroperoxid, Dibenzoylperoxid, Bis-(2,4-dichlorobenzoyl)peroxid, t-Butylperbenzoat sowie organische Azoverbindungen, wie Azo-bis-isobutyronitril und Azo-bis-cyclohexannitril sowie Di- und Polymercaptoverbindungen, wie Dimercaptoethan, 1,6-Dimercaptohexan, 1,3,5-Trimercaptotriazin und Mercapto-terminierte Polysulfidkautschuke wie Mercapto-terminierte Umsetzungsprodukte von Bis-Chlorethylformal mit Natriumpolysulfid.

Die optimale Temperatur zur Durchführung der Nachvernetzung ist naturgemäß von der Reaktivität des Vernetzers abhängig und kann bei Temperaturen von Raumtemperatur bis ca. 180 °C gegebenenfalls unter erhöhtem Druck durchgeführt werden (siehe hierzu Houben-Weyl, Methoden der organischen Chemie, 4. Auflage, Band 14/2, Seite 848). Besonders bevorzugte Vernetzungsmittel sind Peroxide.

Die Vernetzung C=C-Doppelbindungen enthaltender Kautschuke zu Mikrogelen kann auch in Dispersion bzw. Emulsion bei gleichzeitiger, partieller, ggf. vollständiger, Hydrierung der C=C- Doppelbindung durch Hydrazin wie in US 5,302,696 oder US 5,442,009 beschrieben oder ggf. andere Hydrierungsmitteln, beispielsweise Organometallhydridkomplexe erfolgen.

Vor, während oder nach der Nachvernetzung kann ggf. eine Teilchenvergrößerung durch Agglomeration durchgeführt werden.

Bei dem erfindungsgemäß verwendeten Herstellungsverfahren werden stets nicht vollständig homogen vernetzte Mikrogele erhalten, die die oben beschriebenen Vorteile aufweisen können.

Auch Kautschuke, die durch Lösungspolymerisation hergestellt werden, können als Ausgangsprodukte für die Herstellung der Mikrogele dienen. In diesen Fällen geht man von den Lösungen dieser Kautschuke in geeigneten organischen Lösungen aus.

Man stellt die gewünschten Größen der Mikrogele dadurch her, daß man die Kautschuklösung in einem flüssigen Medium, vorzugsweise in Wasser gegebenenfalls unter Zugabe geeigneter oberflächenaktiver Hilfsmitteln wie z.B. Tensiden mittels geeigneter Aggregate mischt, so daß eine Dispersion des Kautschuks im geeigneten Teilchengrößenbereich erhalten wird. Für die Vernetzung der dispergierten Lösungskautschuke geht man wie zuvor für die nachträgliche Vernetzung von Emulsionspolymerisaten beschriebenen, vor. Als Vernetzer eignen sich die zuvor genannten Verbindungen, wobei man das für die Herstellung der Dispersion eingesetzte Lösungsmittel gegebenenfalls vor der Vernetzung z.B. destillativ entfernen kann.

Als Mikrogele zur Herstellung der in den offenbarten Verfahren hergestellten Polymerzusammensetzungen können sowohl nicht-modifizierte Mikrogele, die im wesentlichen keine reaktiven Gruppen insbesondere an der Oberfläche aufweisen als auch, modifizierte, mit funktionellen Gruppen, insbesondere an der Oberfläche modifizierte Mikrogele verwendet werden. Letztere können durch chemische Umsetzung der bereits vernetzten Mikrogele mit gegenüber C=C-Doppelbindungen reaktiven Chemikalien hergestellt werden. Diese reaktiven Chemikalien sind insbesondere solche Verbindungen, mit deren Hilfe polare Gruppen wie z.B. Aldehyd-, Hydroxyl-, Carboxyl-, Nitril- etc. sowie schwefelhaltige Gruppen, wie z.B. Mercapto-, Dithiocarbamat-, Polysulfid-, Xanthogenat-, Thiobenzthiazol- und/oder Dithiophosphorsäuregruppen und/oder ungesättigte Dicarbonsäuregruppen an die Mikrogele chemisch gebunden werden können. Dies trifft auch auf N,N'-m-Phenylendiamin zu. Ziel der Mikrogelmodifizierung ist die Verbesserung der Mikrogelverträglichkeit, wenn die offenbarten Zusammensetzung zur Herstellung der späteren Matrix, in die das Mikrogel eingearbeitet ist, oder die offenbarte Zusammensetzung zur Einarbeitung in eine Matrix verwendet wird, um eine gute Verteilbarkeit bei der Herstellung sowie eine gute Ankopplung zu erreichen.

Besonders bevorzugte Methoden der Modifizierung sind die Pfropfung der Mikrogele mit funktionellen Monomeren sowie die Umsetzung mit niedermolekularen Agentien.

Für die Pfropfung der Mikrogele mit funktionellen Monomeren geht man zweckmäßigerweise von der wässrigen Mikrogeldispersion aus, die man mit polaren Monomeren wie Acrylsäure, Methacrylsäure, Itakonsäure, Hydroxyethyl-(meth)-acrylat, Hydroxypropyl-(meth)-acrylat, Hydroxybutyl-(meth)-acrylat, Acrylamid, Methacrylamid, Acrylnitril, Acrolein, N-Vinyl-2-pyrollidon, N-Allyl-Harnstoff und N-Allyl-Thioharnstoff sowie sekundären Amino-(meth)-acrylsäureester wie 2-tert-Butylaminoethylmethacrylat und 2-tert-Butylaminoethylmethacrylamid unter den Bedingungen einer radikalischen Emulsionspolymerisation umsetzt. Auf diese Weise werden Mikrogele mit einer Kern/Schale-Morphologie erhalten, wobei die Schale eine hohe Verträglichkeit mit der Matrix aufweisen soll. Es ist wünschenswert, daß das im Modifikationsschritt verwendete Monomer möglichst quantitativ auf das unmodifizierte Mikrogel aufpropft. Zweckmäßigerweise werden die funktionellen Monomere vor der vollständigen Vernetzung der Mikrogele hinzudosiert.

Prinzipiell denkbar ist auch eine Pfropfung der Mikrogele in nichtwässrigen Systemen, wobei auf diese Weise auch eine Modifikation mit Monomeren durch ionische Polymerisationsmethoden möglich wird.

Für eine Oberflächenmodifikation der Mikrogele mit niedermolekularen Agentien kommen insbesondere folgende Reagentien in Frage: elementarer Schwefel, Schwefelwasserstoff und/oder Alkylpolymercaptanen, wie 1,2-Dimercaptoethan oder 1,6-Dimercaptohexan, desweiteren Dialkyl- und Dialkylaryldithiocarbamat, wie den Alkalisalzen von Dimethyldithiocarbamat und/oder Dibenzyldithiocarbamat, ferner Alkyl- und Arylxanthogenaten, wie Kaliumethylxanthogenat und Natriumisopropylxanthogenat sowie die Umsetzung mit den Alkali- oder Erdalkalisalzen der Dibutyldithiophosphorsäure und Dioctyldithiophosphorsäure sowie Dodecyldithiophosphorsäure. Die genannten Reaktionen können vorteilhafterweise auch in Gegenwart von Schwefel durchgeführt werden, wobei der Schwefel unter Bildung polysulfidischer Bindungen mit eingebaut wird. Zur Addition dieser Verbindung können Radikalstarter wie organische und anorganische Peroxide und/oder Azoinitiatoren, zugesetzt werden.

Auch eine Modifikation doppelbindungshaltiger Mikrogele wie z.B. durch Ozonolyse sowie durch Halogenierung mit Chlor, Brom und Jod kommen infrage. Auch eine weitere Umsetzung modifizierter Mikrogele wie z.B. die Herstellung hydroxylgruppenmodifizierter Mikrogele aus epoxydierten Mikrogelen wird als chemische Modifikation von Mikrogelen verstanden.

In einer bevorzugten Ausführungsform sind die Mikrogele durch HydroxylGruppen insbesondere auch an der Oberfläche davon modifiziert. Der Hydroxylgruppengehalt der Mikrogele wird durch Umsetzung mit Acetanydrid und Titration der hierbei frei werdenden Essigsäure mit KOH nach DIN 53240 als Hydroxyl-Zahl mit der Dimension mg KOH/g Polymer bestimmt. Die Hydroxylzahl der Mikrogele liegt bevorzugt zwischen 0,1-100, noch bevorzugter zwischen 0,5-50 mg KOH/g Polymer.

Die Menge des eingesetzten Modifizierungsmittels richtet sich nach dessen Wirksamkeit und den im Einzelfall gestellten Anforderungen und liegt im Bereich von 0,05 bis 30 Gewichtsprozent, bezogen auf die Gesamtmenge an eingesetztem Kautschuk-Mikrogel, besonders bevorzugt sind 0,5-10 Gewichtsprozent bezogen auf Gesamtmenge an Kautschukgel.

Die Modifizierungsreaktionen können bei Temperaturen von 0-180 °C, bevorzugt 20-95 °C, ggf. unter Druck von 1-30 bar, durchgeführt werden. Die Modifizierungen können an Kautschuk-Mikrogelen in Substanz oder in Form ihrer Dispersion vorgenommen werden, wobei beim letzten Fall inerte organische Lösungsmittel oder auch Wasser als Reaktionsmedium verwendet werden können. Besonders bevorzugt wird die Modifizierung in wäßriger Dispersion des vernetzten Kautschuks durchgeführt.

Die Verwendung von unmodifizierten Mikrogelen ist insbesondere bei in den erfindungsgemäßen Verfahren hergestellten Polymerzusammensetzungen bevorzugt, die vernetzbare Medien enthalten, die zur Bildung von unpolaren thermoplastischen Werkstoffen (A) führen, wie zum Beispiel Polypropylen, Polyethylen und Blockcopolymeren auf Basis von Styrol, Butadien und Isopren (SBR, SIR) sowie hydrierten Isopren-Styrol-Blockcopolymeren (SEBS), und üblichen TPE-Os und TPE-Vs, etc.

Die Verwendung von modifizierten Mikrogelen ist insbesondere bei in den erfindungsgemäßen Verfahren hergestellten Polymerzusammensetzungen bevorzugt, die vernetzbare Medien enthalten, die zur Bildung von polaren thermoplastischen Werkstoffen (A) führen, wie zum Beispiel PA, TPE-A, PU, TPE-U, PC, PET, PBT, POM, PMMA, PVC, ABS, PTFE, PVDF, etc.

Der mittlere Durchmesser der hergestellten Mikrogele kann mit hoher Genauigkeit beispielsweise auf 0,1 Mikrometer (100 nm) ± 0,01 Mikrometer (10 nm) eingestellt werden, so dass beispielsweise eine Teilchengrößenverteilung erreicht wird, bei der mindestens 75 % aller Mikrogel-Partikel zwischen 0,095 Mikrometer und 0,105 Mikrometer groß sind. Andere mittlere Durchmesser der Mikrogele insbesondere im Bereich zwischen 5 bis 500 nm lassen sich mit gleicher Genauigkeit (mindestens Gew.-75 % aller Teilchen liegen um das Maximum der integrierten Korngrößenverteilungskurve (bestimmt durch Lichtstreuung) in einem Bereich von ± 10 % oberhalb und unterhalb des Maximums) herstellen und einsetzen. Dadurch kann die Morphologie der in den erfindungsgemäßen Verfahren hergestellten Polymerzusammensetzungen dispergierten Mikrogele praktisch "punktgenau" eingestellt und damit die Eigenschaften der in den erfindungsgemäßen Verfahren hergestellten Polymerzusammensetzungen sowie der daraus beispielsweise hergestellten Kunststoffe eingestellt werden.

Die Aufarbeitung der so hergestellten Mikrogele vorzugsweise auf Basis von BR, SBR, NBR, SNBR oder Acrylnitril oder ABR kann beispielsweise durch Eindampfen, Koagulation, durch Co-koagulation mit einem weiteren Latexpolymer, durch Gefrierkoagulation (vgl. US-PS 2187146) oder durch Sprühtrocknung erfolgen. Bei der Aufarbeitung durch Sprühtrocknung können auch handelsübliche Fließhilfen wie beispielsweise $CaCO_3$ oder Kieselsäure zugesetzt werden.

In einer bevorzugten Ausführungsform der in den erfindungsgemäßen Verfahren hergestellten Polymerzusammensetzungen basiert das Mikrogel (B) auf Kautschuk.

In einer bevorzugten Ausführungsform der in den erfindungsgemäßen Verfahren hergestellten Polymerzusammensetzungen ist das Mikrogel (B) durch funktionelle, gegenüber C=C-Doppelbindungen reaktive Gruppen modifiziert.

In einer bevorzugten Ausführungsform weist das Mikrogel (B) einen Quellungsindex in Toluol bei 23 °C von 1 bis 15 auf.

Die in den erfindungsgemäßen Verfahren hergestellten Polymerzusammensetzungen weisen bevorzugt eine Viskosität von 25 mPas bis zu 5000000 mPas, bevorzugter 200 mPas bis zu 3000000 mPas bei einer Drehzahl von 5 $s^{-1}$ in einem Kegelplattenviskosimeter nach DIN 53018 bei 20°C auf.

Organisches, vernetzbares Medium (A)

Die in den erfindungsgemäßen Verfahren hergestellte Mikrogel-enthaltende Polymerzusammensetzung enthält mindestens ein organisches Medium (A), welches bei einer Temperatur von 120°C eine Viskosität von weniger als 30000 mPas, bevorzugt weniger als 10000 mPas, bevorzugter weniger als 1000, noch bevorzugter weniger als 750 mPas und noch bevorzugter weniger als 500 mPas aufweist.

Die Viskosität des vernetzbaren, organischen Mediums (A) wird bei einer Drehzahl von 5 $s^{-1}$ mit einem Kegel-Platte-Meßsystem nach DIN 53018 bei 120°C bestimmt.

Ein solches Medium ist bei Raumtemperatur (20°C) flüssig bis fest, bevorzugt flüssig bzw. fließfähig.

Organisches Medium im Sinne der Erfindung bedeutet, dass das Medium mindestens ein Kohlenstoffatom enthält.

Bevorzugt handelt es sich bei den vernetzbaren, organischen Medien (A) um solche, die über Heteroatome enthaltende funktionelle Gruppen oder C=C-Gruppen vernetzbar sind.

Diese weisen im allgemeinen die oben genannten Viskositäten auf, es ist jedoch auch möglich vernetzbare Medien mit höheren Viskositäten zu verwenden und diese mit weiteren vernetzbaren Medien niedrigerer Viskosität zu mischen, um die vorstehend genannten Viskositäten einzustellen.

Als Komponente (A) werden bevorzugt bei Raumtemperatur (20°C) flüssige, vernetzbare Medien eingesetzt, die im allgemeinen durch Reaktion mit einer weiteren Komponente (C), beispielsweise durch radikalische, insbesondere peroxidische Vernetzung in Gegenwart von Radikalstartern oder durch UV-Strahlung, durch Polyaddition oder Polykondensation, wie im folgenden aufgeführt, zu Kunststoffen ausgehärtet werden.

Die Wahl einer zur Vernetzung geeigneten Komponente (C) für ein geeignetes vernetzbares organisches Medium (A) ist an sich dem Fachmann geläufig, und es kann auf die einschlägige Fachliteratur verwiesen werden.

Die für die erfindungsgemäße Herstellung der Zusammensetzungen geeigneten flüssigen, vernetzbaren, organischen Medien (A) sind beispielsweise Polyole auf Polyester-, Polyether- oder Polyetherpolyesterbasis und Epoxidharze, ungesättigte Polyesterharze und Acrylatharze. Die hier beschriebenen Harze bzw. Harzmischungen und ihre Härter bzw. Härtermischungen sind bevorzugt dadurch gekennzeichnet, dass eine Komponente eine Funktionalität nahe 2,0 hat und die andere Komponente eine Funktionalität von bevorzugt 1,5 bis 2,5 bevorzugter von 2 bis 2,5 besitzt, so dass Polymere entstehen, die linear oder schwach verzweigt, aber nicht chemisch vernetzt sind[0]. Es können auch Zusätze mono- und multifunktionellen Komponenten mit der Funktionalität 1 bis ca. 4, bevorzugt 1 - 3 eingesetzt werden, wobei in der Summe Funktionalitäten von etwa 1,5 bis 2,5 resultieren.

Polyesterpolyole werden durch Kondensation von Dicarbonsäuren mit überschüssigen Mengen von Di- oder Polyolen hergestellt oder beruhen auf Caprolactonen.

Als Polyetherpolyole werden bevorzugt solche auf Basis Propylenoxid und/oder Ethylenoxid eingesetzt. Auch kommen Polyoxytetramethylenglykole zum Einsatz.

Die Anlagerung von Alkylenoxiden an Di- oder Polyamine führt zu stickstoffhaltigen basischen Polyethern. Die genannten Polyole werden bevorzugt mit aromatischen Isocyanaten, wie TDI (Toluylendiisocyanat) oder MDI (Methylendiphenyldiisocyanat), in bestimmten Fällen auch mit NDI (Naphthalin-1,5-diisocyanat) oder TODI (3,3'-Dimethyl-4,4'-diisocyanato-biphenyl) und deren Derivaten, aromatischen Polyisocyanaten auf gleicher Basis oder aliphatischen Isocyanaten (HDI, IPDI, $H_{12}$MDI (4,4'-Dicyclohexylmethandiisocyanat), HTDI (Methylcyclohexyldiisocyanat), XDI (Xylylendiisocyanat), TMDI (Trimethylhexamethylendiisocyanat), DMI (Dimeryldiisocyanat)) oder aliphatischen Polyisocyanaten auf gleicher Basis wie dem Trimeren des HDI (Hexamethylendiisocyanat) oder des IPDI (Isophorondiisocyanat) umgesetzt.

Epoxidharze werden mit aminischen Härter, Aminaddukten, Aminen oder Polyaminen oder Säureanhydriden ausgehärtet.

Epoxidharze werden hergestellt durch Umsetzung von Phenolen oder Alkoholen mit Epichlorhydrin. Das auch mengenmäßig bedeutendste Harz ist der Bisphenol-A-Diglycidylether neben dem Bisphenol-F-Diglycidylether. Weitere Epoxidharze sind die Verdünner wie Hexandiglycidylether, die Epoxid-Novolake, die Glycidylester, die Glycidylamine, die Glycidylisocyanurate und die cycloaliphatischen Epoxide.

Wichtige Amine sind die aliphatischen und cycloaliphatischen Amine wie Diethylentriamin (DETA), Triethylentetramin (TETA), 3,3',5-Trimethylhexamethylendiamin (TMD), Isophorondiamin (IPD), m-Xylylendiamin (MXDA), die aromatischen Amine wie Methylendianilin (MDA), 4,4'-Diaminodiphenylsulfon (DDS), Amin-Adukt wie z. B. aus TMD und Bisphenol-A-diglycidylether und DETA-Phenol-Mannichbase, Polyaminoamide wie sie bei der Amidbildung aus Polyethylenaminen und Monomer- und Dimerfettsäuren entstehen, und Dicyandiamid. Amine mit geeigneter niedriger Funktionalität sind die entsprechenden alkylierten Typen.

Cyclische Säureanhydride sind z. B. Phthalsäureanhydrid (PSA) und Hexahydrophthalsäureanhydrid.

Ungesättigte Polyesterharze sind lineare, lösliche Polykondensationsprodukte aus hauptsächlich Malein- bzw. Fumarsäure und zweiwertigen Alkoholen, die in einem zur Copolymerisation befähigten Monomeren, meist Styrol, gelöst sein können, und werden durch Zugabe von Peroxiden polymerisiert.

Als Säuren können in den UP-Harzen Adipin-, Phthalsäure, Phthalsäureanhydrid, Tetrahydrophthalsäure, Isophthalsäure, Terephthalsäure, Tetrachlorphthalsäure, Tetrabromphthalsäure, Hetsäure und Endo-methylentetrahydrophthalsäureanhydrid eingesetzt werden. Als Diole für UP-Harze kommen hauptsächlich 1,2- und 1,3-Propandiol, Ethylenglykol, Diethylenglykol, Dipropylenglykol und Monoallylether von Glycerin und Trimethylolpropan zum Einsatz.

Verwendete Monomere neben sonstigen polymerisierbaren Monomeren sind z. B. Styrol, alpha-Methylstyrol, Methylacrylat, Methylmethacrylat und Vinylacetat.

Die Vernetzung der vernetzbaren Zusammensetzung wird bevorzugt peroxidisch oder durch UV-Licht bzw. Elektronenstrahlen durchgeführt.

Den ungesättigten Polyesterharzen ähnlich sind die Vinylester wie sie z. B. von Dow - Derakane und Derakane Momentum - hergestellt werden.

Die für die Herstellung der offenbarten Zusammensetzungen geeigneten flüssigen, vernetzbaren, organischen Medien (A) schließen weiterhin beispielsweise ein: multifunktionelle Alkohole, wie difunktionelle Alkohole, wie Ethylenglykol, Propandiol, Butandiol, Hexandiol, Octandiol, Polyetherpolyole, wie Diethylenglykol, Dipropylenglykol, Polyalkylenoxiddiole, wie Polyethylen- und/oder Propylenoxiddiole, Polyhexamethylencarbonatdiole, multifunktionelle Alkohole, wie Glycerin, Trimethylolpropan etc., multifunktionelle Carbonsäuren, cyclische Carbonsäureanhydride, multifunktionelle Isocyanate, wie TDI (Toluylendiisocyanat), MDI (Methylendiphenyldiisocyanat), NDI (Naphthalin-1,5-diisocyanat), TODI (3,3'-Dimethyl-4,4'-diisocyanato-biphenyl) und deren Derivate, HDI, IPDI, $H_{12}$MDI (4,4'-Dicyclohexylmethandiisocyanat), HTDI (Methylcyclohexyldiisocyanat), XDI (Xylylendiisocyanat), TMDI (Trimethylhexamethylendiisocyanat), DMI (Dimeryldiisocyanat)) oder aliphatischen Polyisocyanaten auf gleicher Basis wie dem Trimeren des HDI (Hexamethylendiisocyanat) oder des IPDI (Isophorondiisocyanat), Polyisocyanatprepolymere, insbesondere oligomerisierte Diisocyanate, verkappte Polyisocyanate, multifunktionelle Amine, wie die oben genannten, wie Ethylendiamin, Tetramethylendiamin, Hexamethylendiamin, Trimethylhexamethylendiamin, Isophorondiamin, Dodecyldiamin, Lactame, wie Caprolactam, Butyrolactam, Lactone, wie gamma-Butyrolacton, Caprolacton, cyclische Ether, wie Tetrahydrofuran, ungesättigte Kohlenwasserstoffe, Ethylen, Propylen, Butadien, Styrol, Methylstyrol, Acrylnitril, Vinylester, wie Vinylacetat, Vinylpropionat, Vinylbutyrat, Cyclopenten, Norbornen, Dicyclopenten, etc.

Weitere mögliche vernetzbare Medien sind Methylmethacrylat, Alkylmethacrylate, Alkylacrylate oder Mischungen mit Comonomeren wie Methacrylaten oder Acrylaten, welche durch Peroxide oder UV-Strahlung / Elektronenstrahlung gehärtet werden.

Besonders bevorzugte vernetzbare organische Medien sind Polyole, Polyetherpolyole, Polyetherdiole, Polyesterdiole, Polyetheresterdiole, Polyhexamethylencarbonatdiole, Diisocyanate, Polyisocyanatprepolymere.

Es ist auch möglich, die üblicherweise als Vernetzter (C) eines Polymersystems bezeichneten polyfunktionellen Verbindungen als vernetzbares Medium im Sinne der Erfindung mit den Mikrogelen zu mischen, und die erhaltene Zusammensetzung mit der entsprechenden zu vernetzenden Komponente umzusetzen.

Grundsätzlich muß darauf geachtet werden, dass die Mikrogele gegenüber dem vernetzbaren Medium reaktiv sein können.

In den oben beschriebenen Materialien können auch Polymere oder Copolymere der genannten Monomere gelöst sein.

Für die Härtung mit UV-Strahlung / Elektronenstrahlung werden insbesondere Monomere wie z. B. 2-Ethylhexylacrylat (EHA), Stearylacrylat und Polyetheracrylate wie z. B. Polyethylenglykoldiacrylat 400 (PEG400DA), Polyesteracrylate, die z. B. aus Polyesterpolyolen bzw. entsprechenden Polyol-/Polycarbonsäurengemischen durch Veresterung mit Acrylsäure hergestellt werden, Urethanacrylate und acrylierte Polyacrylate eingesetzt.

Die Erfindung offenbart weiterhin die Verwendung der in den erfindungsgemäßen Verfahren hergestellten Polymerzusammensetzungen zur Herstellung von Mikrogel-enthaltenden Polymeren, wie vorstehend erläutert.

Werden als vernetzbare Komponente (A) solche Komponenten verwendet, die zur Bildung von thermoplastischen Polymeren führen würden, stellt man völlig überraschend fest, das Mikrogel-enthaltende Polymere erhalten werden, die sich wie thermoplastische Elastomere verhalten. Die Erfindung betrifft somit insbesondere auch thermoplastische Elastomere, die durch die Polymerisation bzw. Vernetzung der offenbarten Zusammensetzungen, die die Komponente (A) enthalten, erhalten werden.

Die Erfindung offenbart weiterhin auch die Polymere bzw. Vernetzungsprodukte, insbesondere die thermoplastischen Elastomere, die durch Vernetzen bzw. Polymerisieren der die Mikrogele und die vernetzbare Komponente (A) enthaltenden Zusammensetzungen erhalten werden, sowie die daraus nach üblichen Verfahren hergestellten Formkörper und Beschichtungen.

Im Vergleich zur Einarbeitung von Mikrogelen in Polymere durch Extrusionsverfahren, wie sie zum Beispiel in der noch unveröffentlichten DE 10345043 mit gleichem Anmeldetag beschrieben ist, oder den sogenannten insitu-Verfahren, bei dem die Kautschukteilchen während des Misch- bzw. des Dispergierprozesses vernetzt werden (z.B. US 5013793), erlauben die offenbarten Zusammensetzungen eine besonders einfache und gleichmäßige Einarbeitung von Mikrogelen in Polymere, wodurch die erhaltenen Polymere überraschend verbesserte Eigenschaften besitzen.

Die Erfindung betrifft ein **Verfahren zur Herstellung von Mikrogel-enthaltenden Polymerzusammensetzungen,** welches das Mischen mindestens eines vernetzbaren, organischen Mediums (A), welches bei einer Temperatur von 120°C eine Viskosität von weniger als 30000 mPas aufweist, und mindestens eines Mikrogels (B), das nicht durch elektromagnetische Strahlung einer Wellenlänge von weniger als 0,1 $\mu$m vernetzt ist, und dadurch gekennzeichnet, dass die Primärpartikel des Mikrogels (B) eine durchschnittliche Teilchengröße des Mikrogels (B) von weniger als 99 nm aufweisen und dass die Mikrogele (B) in Toluol bei 23°C unlösliche Anteile von mindestens 90 Gew.-% aufweisen zu einer Zusammensetzung, enthaltend (A) und (B), die anschließende Zugabe eines Vernetzungsmittels (C) für das vernetzbare Medium (A) und das anschließende Vernetzen der Zusammensetzung umfasst.

Nach diesem Verfahren können sogenannte thermoplastische Elastomere erhalten werden, d. h. Polymere, die sich aufgrund der Anwesenheit der Mikrogelphase bei niedrigen Temperaturen (wie Raumtemperatur) wie Elastomere verhalten, bei höheren Temperaturen sich jedoch wie Thermoplaste verarbeiten lassen. In einer bevorzugten Ausführungsform des obigen Verfahrens ist das vernetzbare, organische Medium (A) ein Polyol, bevorzugter ein Diol, oder eine Mischung davon und das Vernetzungsmittel (C) ein Polyisocyanat, bevorzugt ein Diisocyanat, oder eine Mischung davon ist. Gegebenenfalls können, wie dem Fachmann bekannt ist, auch monofunktionelle sogenannte Kettenabbruchsmittel anwesend sein.

Die offenbarte Zusammensetzung enthält bevorzugt 1 bis 60 Gew.-%, bevorzugter 3 - 40 Gew.-%, noch bevorzugter 5 - 25 Gew.-% des Mikrogels (B), bezogen auf die Gesamtmenge der Zusammensetzung.

Die offenbarte Zusammensetzung enthält weiterhin bevorzugt 10 bis 99 Gew.-%, bevorzugter 30 bis 95 Gew.-%, noch bevorzugter 40 bis 90 Gew.-%, weiterhin bevorzugter 50 bis 85 Gew.-% des vernetzbaren, organischen Mediums (A).

Die in dem erfindungsgemäßen Verfahren hergestellte Zusammensetzung besteht bevorzugt aus dem vernetzbaren, organischen Medium (A) und dem Mikrogel (B) und gegebenenfalls den unten stehenden weiteren Komponenten. Die Anwesenheit von Wasser ist nicht bevorzugt, bevorzugt enthalten die offenbarten Zusammensetzungen weniger als 0,8 Gew.-%, noch bevorzugter weniger als 0,5 Gew.-% Wasser. Am meisten bevorzugt ist die Anwesenheit von Wasser ausgeschlossen (< 0,1 Gew.-%).

In einer weiteren Ausführungsform kann die offenbarte Zusammensetzung beispielsweise zusätzlich nicht-vernetzbare organische Medien, wie insbesondere organische Lösungsmittel, gesättigte oder aromatische Kohlenwasserstoffe, Polyetheröle, Esteröle, Polyetheresteröle, Phosphorsäureester, siliciumhaltige Ölen und Halogenkohlenwasserstoffen oder Kombinationen derselben, Füllstoffe, Pigmente, Katalysatoren und Additive, wie Dispergierhilfsmittel, Entlüfter, Fließmittel, Verlaufsmittel, Hilfsmittel zur Untergrundbenetzung, Haftverbesserer zur Steuerung der Untergrundbenetzung, zur Steuerung der Leitfähigkeit, Hilfsmittel zur Steuerung der Farbtonstabilität, des Glanzes und des Ausschwimmens enthalten.

Dabei lassen sich insbesondere die genannten Additive besonders gleichmäßig in die offenbarten Zusammensetzungen einarbeiten, was wiederum zur Verbesserung der daraus hergestellten Polymerzusammensetzungen führt.

Besonders geeignete Pigmente und Füllstoffe zur Herstellung der offenbarten Zusammensetzungen, die das vernetzbare Medium (A) enthalten, und daraus hergestellter Mikrogel-enthaltenden Kunststoffe sind beispielsweise: anorganische und organische Pigmente, silikatische Füllstoffe wie Kaolin, Talkum, Carbonate wie Calciumcarbonat und Dolomit, Bariumsulfat,

Metalloxide, wie Zinkoxid, Calciumoxid, Magnesiumoxid, Aluminiumoxid, hochdisperse Kieselsäuren (gefällte und thermisch hergestellte Kieselsäuren), Metallhydroxide, wie Aluminiumhydroxid und Magnesiumhydroxid, Glasfasern und Glasfaserprodukte (Latten, Stränge oder Mikroglaskugeln), Kohlenstofffasern, Thermoplastfasern (Polyamid, Polyester, Aramid), Kautschukgele auf Basis Polychloropren und/oder Polybutadien oder auch aller anderer vorher beschriebener Gelpartikel, die einen hohen Vernetzungsgrad besitzen und Teilchengröße 5 bis 1000 nm.

Die genannten Füllstoffe können alleine oder im Gemisch eingesetzt werden. In einer besonders bevorzugten Ausführung des Verfahrens werden 1 - 30 Gewichtsteile Kautschukgel (B), gegebenenfalls zusammen mit 0,1 bis 40 Gewichtsteilen Füllstoffen, und 30 - 99 Gewichtsteile flüssiges, vernetzbares Medium (A) zur Herstellung der offenbarten Zusammensetzungen eingesetzt.

Die offenbarten Zusammensetzungen können weitere Hilfsmittel enthalten wie Vernetzer, Reaktionsbeschleuniger, Alterungsschutzmittel, Wärmestabilisatoren, Lichtschutzmittel, Ozonschutzmittel, Weichmacher, Tackifier, Treibmittel, Farbstoffe, Wachse, Streckmittel, organische Säuren, Verzögerer, sowie Füllstoffaktivatoren, wie beispielsweise Trimethoxysilan, Polyethylenglykol, Lösungsmittel, wie die oben genannten, oder andere, die in den beschriebenen Industrien bekannt sind.

Die Hilfsmittel werden in üblichen Mengen, die sich u.a. nach dem Verwendungszweck richten, eingesetzt. Übliche Mengen sind z.B. Mengen von 0,1 bis 80 Gew.-%, bevorzugt 0,1 bis 50 Gew.-%, bezogen auf die eingesetzte Menge an flüssigem, vernetzbaren Medium (A).

In einer bevorzugten Ausführungsform wird die offenbarte Zusammensetzung durch Mischen von mindestens einem vernetzbaren, organischen Medium (A), welches bei einer Temperatur von 120°C eine Viskosität von weniger als 30000 mPas aufweist, und mindestens einem trockenen Mikrogelpulver (B) (bevorzugt weniger als 1 Gew.-%, noch bevorzugter weniger als 0,5 Gew.-% flüchtige Anteile (beim Mischen der Komponente (A) und (B) werden keine Mikrogel-Latices verwendet)), das nicht durch elektromagnetische Strahlung einer Wellenlänge von weniger als 0,1 $\mu$m vernetzt ist, mittels eines Homogenisators, einer Perlmühle, einer Dreiwalze, einer Ein- oder Mehrwellen-Extruderschnecke, eines Kneters und/ oder eines Dissolvers, bevorzugt mittels eines Homogenisators, einer Perlmühle oder einer Dreiwalze hergestellt.

Hinsichtlich der Viskosität der Zusammensetzung ist der Kneter, im welchem bevorzugt nur sehr hochviskose (fast feste bis feste) Zusammensetzungen eingesetzt werden können, am eingeschränktesten, d. h. er ist nur in Sonderfällen anwendbar.

Nachteilig an der Perlmühle ist der vergleichsweise eingeschränkte Viskositätsbereich (tendenziell bevorzugt für dünne Zusammensetzungen), hohe Reinigungsaufwand, teure Produktwechsel der verwendbaren Zusammensetzungen sowie der Abrieb von Kugeln und Mahlapparatur.

Besonders bevorzugt erfolgt die Homogenisierung der offenbarten Zusammensetzungen mittels eines Homogenisators oder einer Dreiwalze. Nachteilig an der Dreiwalze ist der vergleichsweise eingeschränkte Viskositätsbereich (tendenziell sehr dicke Zusammensetzungen), geringer Durchsatz und die nicht geschlossene Arbeitsweise (schlechter Arbeitsschutz).

Sehr bevorzugt erfolgt die Homogenisierung der offenbarten Zusammensetzungen mittels eines Homogenisators. Der Homogenisator erlaubt es, dünne und dicke Zusammensetzungen bei hohem Durchsatz zu verarbeiten (hohe Flexibilität). Produktwechsel sind vergleichsweise schnell und problemlos möglich.

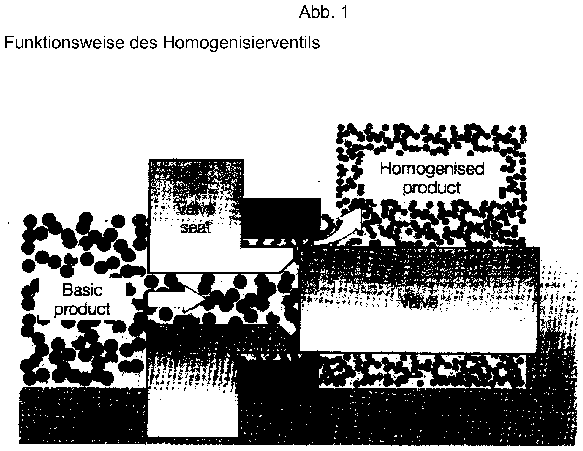

Die Dispergierung der Mikrogele (B) im flüssigen Medium (A) erfolgt im Homogenisator im Homogenisierventil (s. Abb. 1).

Bei dem erfindungsgemäß eingesetzten Verfahren werden Agglomerate in Aggregate und/oder Primärpartikel zerteilt. Agglomerate sind physikalisch trennbare Einheiten, bei deren Dispergierung keine Änderung der Primärpartikelgröße erfolgt.

Abb. 1. zeigt die Funktionsweise des Homogenisierventils.

(Darin bedeuten:

    Basic product: Ausgangsprodukt,
    Valve seat: Ventilsitz,
    Valve: Ventil,
    Homogenised product: Homogenisiertes Produkt).

Das zu homogenisierende Produkt tritt in das Homogenisierventil mit langsamer Geschwindigkeit ein und wird im Homogenisierspalt auf hohe Geschwindigkeiten beschleunigt. Die Dispergierung erfolgt hinter dem Spalt hauptsächlich aufgrund von Turbulenzen und Kavitation.

Die Temperatur der offenbarten Zusammensetzung beträgt bei Aufgabe in den Homogenisator zweckmäßig -40 - 140°C, vorzugsweise 20 - 80 °C.

Die zu homogenisierende offenbarten Zusammensetzung wird zweckmäßig bei einem Druck von 20 bis 4000 bar, bevorzugt 100 bis 4000 bar, bevorzugt 200 bis 4000 bar, bevorzugt 200 - 2000 bar, sehr bevorzugt 500 - 1500 bar im Gerät homogenisiert. Die Anzahl der Durchläufe richtet sich nach der gewünschten Dispergiergüte und kann zwischen einem und 40, bevorzugt einem bis 20, bevorzugter einem bis vier Durchgängen variieren.

Die erfindungsgemäß hergestellten Zusammensetzungen besitzen eine besonders feine Partikelverteilung, die besonders mit dem Homogenisator erreicht wird, der auch hinsichtlich der Flexibilität des Verfahrens bezüglich variierender Viskositäten der flüssigen Medien und der resultierenden Zusammensetzungen und notwendigen Temperaturen sowie der Dispergiergüte äußerst vorteilhaft ist (Beispiel 4).

Die Erfindung betrifft weiterhin die Verwendung der offenbarten Zusammensetzungen zur Herstellung von Formartikeln sowie die aus den offenbarten Zusammensetzungen erhältlichen Formartikel. Beispiele derartiger Formartikel schließen ein: Steckverbindungen, Dämpfungs-, insbesondere Schwingungs- und Stoßdämpfungselemente, akustische Dämpfungselemente, Profile, Folien, insbesondere dämpfende Folien, Fußmatten, Bekleidung, insbesondere Schuheinlagen, Schuhe, insbesondere Schischuhe, Schuhsohlen, Elektronische Bauteile, Gehäuse für elektronische Bauteile, Werkzeuge, Dekorative Formkörper, Verbundwerkstoffe, Formteile für Automobile etc.

Die offenbarten Formartikel können aus den offenbarten Zusammensetzungen durch übliche Verarbeitungsverfahren hergestellt werden, wie durch Abgießen und Spritzen über 2-K-Anlagen, Schmelzextrusion, Kalandrieren, IM, CM, und RIM etc.

Die Erfindung wird mit Blick auf die folgenden Beispiele näher erläutert. Die Erfindung ist selbstverständlich nicht auf diese Beispiele beschränkt.

## Beispiele

**Beispiel 1:** Hydroxylgruppenmodifiziertes SBR-Gele (RFL 403A) in Desmophen 1150

In dem nachfolgend beschriebenen Beispiel wird gezeigt, dass unter Verwendung eines hydroxylgruppenmodifizierten Mikrogels auf Basis von SBR mit einem Homogenisator durch Anwendung von 900 bis 1000 bar eine MikrogelZusammensetzung mit Teilchendurchmessern von 220 nm und kleiner hergestellt werden kann.
In der nachfolgenden Tabelle ist die Zusammensetzung der Mikrogelzusammensetzung angegeben:

| 1. Desmophen 1150 | 79,7 |
| 2. RFL 403 A | 20 |
| 3. Tego Airex 980 | 0,3 |
| **Summe** | 100 |

Desmophen 1150 ist ein verzweigter Polyalkohol mit Ester- und EtherGruppen der Fa. Bayer AG zur Herstellung von zähelastischen Beschichtungen.

Bei Tego Airex 980, ein organisch modifiziertes Polysiloxan, handelt es sich um einen Entlüfter der Fa. Tego Chemie Service GmbH.

RFL 403A ist ein vernetztes, oberflächenmodifiziertes Kautschukgel auf Basis SBR der Fa. RheinChemie Rheinau GmbH.

RFL 403 A besteht aus 70 Gew.-% Butadien, 22 Gew.-% Styrol, 5 Gew.-% Ethylenglykoldimethacrylat (EGDMA) und 3 Gew.-% Hydroxyethylmethacrylat (HEMA).

Herstellungsbeispiel 1 zu RFL 403A

Mikrogel auf Basis von hydroxylmodifiziertem SBR, hergestellt durch direkte Emulsionspolymerisation unter Verwendung des vernetzenden Comonomers Ethylenglykoldimethacrylat.

Es werden 350 g des Na-Salzes einer langkettigen Alkylsulfonsäure (368,4 g Mersolat K30/95 der Bayer AG) und 27 g des Na-Salzes methylenverbrückter Naphthalinsulfonsäure (Baykanol PQ der Bayer AG) in 2,03 kg Wasser gelöst und in einem 5 l-Autoklaven vorgelegt. Der Autoklav wird dreimal evakuiert und mit Stickstoff beaufschlagt. Danach werden 872 g Butadien, 274 g Styrol, 69 g Ethylenglykoldimethacrylat (90%ig), 38,5 g Hydroxyethylmethacrylat (96%) zugegeben. Die Reaktionsmischung wird unter Rühren auf 30°C aufgeheizt. Anschließend wird eine wäßrige Lösung bestehend aus 25 g Wasser, 180 mg Ethylendiamintetraessigsäure (Merck-Schuchardt), 150 mg Eisen(II)-sulfat*7H$_2$0, 400 mg Rongalit C (Merck-Schuchardt) sowie 500 mg Trinatriumphosphat*12H$_2$O zudosiert. Die Reaktion wird durch Zugabe einer wäßrigen Lösung von 350 mg p-Menthanhydroperoxid (Trigonox NT 50 der Akzo-Degussa) und 25 g Mersolat K 30/95, gelöst in 25 g Wasser gestartet. Nach 2,5 Stunden Reaktionszeit wird die Reaktionstemperatur auf 40 °C erhöht. Nach 5 Stunden Reaktionszeit aktiviert man mit einer wäßrigen Lösung bestehend aus 25 g Wasser, in dem 25 g Mersolat K30/95 und 350 mg p-Menthanhydroperoxid (Trigonox NT 50) gelöst sind, nach. Bei Erreichen eines Polymerisationsumsatzes von 95-99 % wird die Polymerisation durch Zugabe einer wäßrigen Lösung von 2,5 g Diethylhydroxylamin, gelöst in 50 g Wasser, abgestoppt. Danach werden nicht umgesetzte Monomeren durch Strippen mit Wasserdampf aus dem Latex entfernt. Der Latex wird filtriert und wie im Beispiel 2 der US 6399706 mit Stabilisator versetzt, koaguliert und getrocknet.

RFL 403B besteht aus 80 Gew.-% Styrol, 12 Gew.-% Butadien, 5 Gew.-% Ethylenglykoldimethacrylat (EGDMA) und 3 Gew.-% Hydroxyethylmethacrylat (HEMA). RFL 403 B wird in Analogie zu RFL 403 A hergestellt, wobei bei der Polymerisation 996 g Styrol, 149 g Butadien, 62 g Ethylenglykoldimethacrylat und 37 g Hydroxyethylmethacrylat eingesetzt werden.

RFL 403A und RFL 403B wurden aus dem Latex durch Sprühtrocknung gewonnen.

Für die Herstellung der Zusammensetzung wurde Desmophen 1150 vorgelegt und RFL 403A und Tego Airex 980 unter Rühren mittels Dissolver zugeben. Die Mischung wurde einen Tag lang stehen gelassen und dann mit dem Homogenisator weiterverarbeitet.

Die Zusammensetzung wurde bei Raumtemperatur in den Homogenisator gegeben und bei 900 bis 1000 bar im Batchbetrieb 19 mal durch den Homogenisator gegeben. Beim ersten Durchgang erwärmt sich die Zusammensetzung auf ca. 40°C, beim zweiten Durchgang auf ca. 70°C. Es wurde darauf geachtet, dass die Temperatur der Zusammensetzung 120°C nicht überschreitet, was durch Abkühlen im Kühlschrank realisiert wurde.

Der mittlere Teilchendurchmesser der Mikrogelpartikel wurde durch ein LS 230 Beckman-Coulter-Gerät mittels Laserlichtstreuung gemessen. Der d50-Wert der Mikrogelpartikel beträgt vor der Homogenisierung 112 $\mu$m und nach der Homogenisierung 220 nm.

Der (theoretische) Primärpartikeldurchmesser von 70 nm wird bei 10 % der Teilchen in der Zusammensetzung erreicht. Dabei ist zu beachten, dass die statische Laserlichtstreuung im Gegensatz zur Ultrazentrifuge keine absoluten Werte liefert. Die Werte sind bei dieser Zusammensetzung tendenziell zu hoch.

Das LS 230 Beckman-Coulter-Gerät verwendet als Meßmethode ein statisches Verfahren, die Laserdiffraktometrie (LD). Der Messbereich kann durch Zuschalten der PIDS-Technologie (PIDS: polarization intensity differential scattering) von 2000 $\mu$m bis hinab zu 40 nm erweitert werden.

**Beispiel 2:** Hydroxylgruppenmodifiziertes SBR-Gele (RFL 403A) in Desmophen RC-PUR KE 8306

In dem nachfolgend beschriebenen Beispiel wird gezeigt, daß unter Verwendung von hydroxylgruppenmodifizierten Mikrogelen auf Basis von SBR Zusammensetzungen, die Partikel oder Partikelagglomerate mit Teilchendurchmessern hauptsächlich im Bereich von 50 nm bis 500 nm, bei einem mittleren Teilchendurchmesser von ca. 250 nm, enthalten, in einem Homogenisator durch Anwendung von 900 bis 1000 bar hergestellt werden können.

In der nachfolgenden Tabelle ist die Zusammensetzung der Mikrogelpaste angegeben:

| 1. RC-PUR KE 8306 | 93,3 |
|---|---|
| 2. Byk-LP X 6331 | 0,2 |
| 3. RFL 403A | 6,5 |
| **Summe** | 100 |

Bei RC-PUR KE 8306 handelt es sich um eine aktivierte Polyolabmischung zur Herstellung von PUR im Kaltgießverfahren der Fa. RheinChemie Rheinau GmbH.

Als Vernetzungskomponente wird RC-DUR 120, ein aromatisches Polyisocyanat der Fa. RheinChemie Rheinau GmbH, eingesetzt.

Bei Byk-LP X 6331 handelt es sich um einen Entlüfter für PU-Systeme der Fa. Byk-Chemie GmbH.

RFL 403A ist ein vernetztes, oberflächenmodifiziertes Kautschukgel auf Basis SBR der Fa. Rhein Chemie Rheinau GmbH. RFL 403 B wurde oben beschrieben.

Für die Herstellung der erfindungsgemäßen Zusammensetzung wurde RC-PUR KE 8306 vorgelegt und Byk-LP X 6331 und RFL 403A oder RFL 403 B unter Rühren zugeben. Die Mischung wurde mindestens einen Tag lang stehen gelassen und dann mit dem Homogenisator weiterverarbeitet.

Die Zusammensetzung wurde bei Raumtemperatur in den Homogenisator gegeben und bei 900 bis 1000 bar im Batchbetrieb 2 mal durch den Homogenisator gegeben. Beim ersten Durchgang erwärmt sich die Mikrogelpaste auf ca. 40°C, beim zweiten Durchgang auf ca. 70°C.

Im Anschluß wurde die Zusammensetzung mit RC-DUR 120 zu einem Polymer umgesetzt, das zu der Klasse der Kaltgießelastomere (PUR-E) gehört.

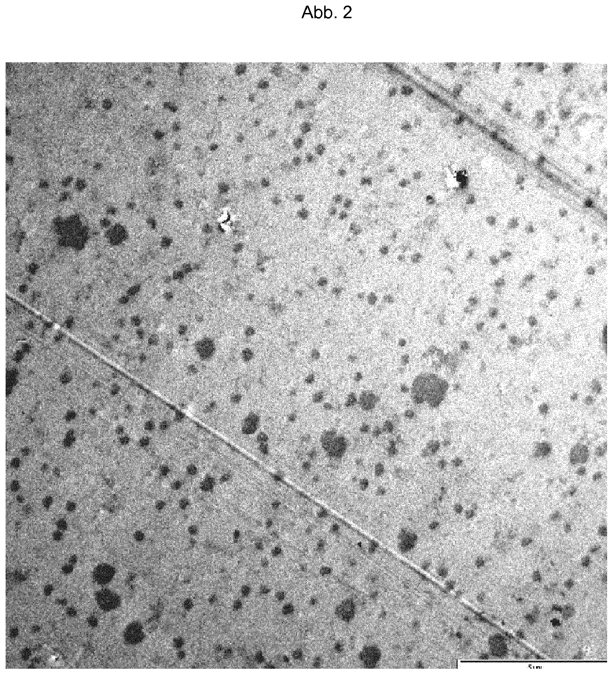

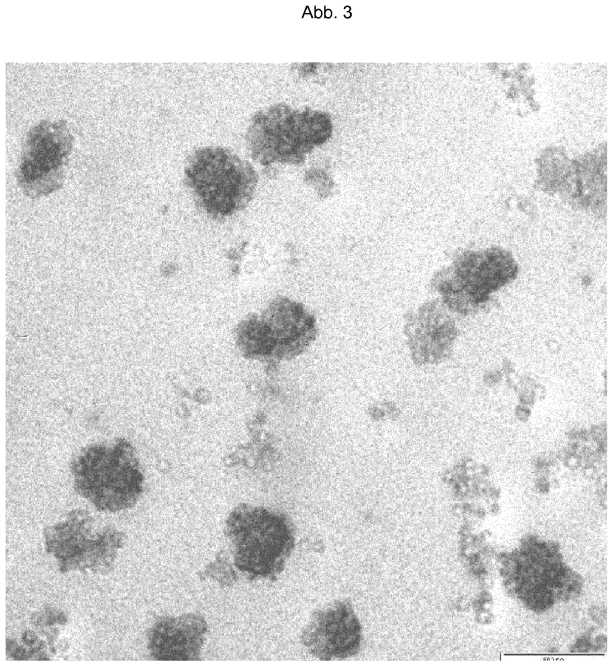

Die Teilchengrößen der Kautschukgelpartikel und -agglomerate sowie die Struktur der Kautschukgelagglomerate im erhaltenen PUR-E wurden mittels TEM-Aufnahmen untersucht (s. Abb. 2 und 3).

Durch die besonders homogene Verteilung der Mikrogele in der Polyolkomponente von RC-PUR KE 8306 werden besondere Eigenschaften wie eine verbesserte Weiterreißfestigkeit und bessere Schlagzähigkeit erzielt (siehe nachfolgende Tabelle).

| | MG-Gehalt | Shore D | Weiterreißfestigkeit | Schlagzähig keit |
|---|---|---|---|---|
| | [%] | [-] | [N/mm] | [kJ/m$^2$] |
| KE 8306 | 0[1)] | 82 | 29 | 48 |
| KE 8306 | 5[1)] | 82 | 47 | 62 |

(fortgesetzt)

| | MG-Gehalt [%] | Shore D [-] | Weiterreißfestigkeit [N/mm] | Schlagzähig keit [kJ/m$^2$] |
|---|---|---|---|---|
| KE 8306 | 10[1] | 81 | 51 | 65 |
| KE 8306 | 10[2] | 83 | 43 | - |

1) RFL 403 A
2) RFL 403 B

Die Shore D-Härte wurde in Anlehnung an DIN 53505 und die Weiterreißfestigkeit in Anlehnung an DIN 53515 bei Raumtemperatur (ca. 23°C) gemessen. Die Charpy-Schlagzähigkeit wurde in Anlehnung an DIN EN ISO 179 bei 22°C gemessen. Die zur Prüfung geschickten Probestäbe hatten die Maße ca. 15,3 cm x 1,5 cm x 1 cm.

Nachweis der Morphologie

Der Nachweis der Morphologie erfolgt mit Hilfe von Transmissions-Elektronenmikroskopie (TEM)-Aufnahmen.

TEM:

Probenpräparation für die Transmissions-elektronenmikroskopischen Untersuchungen.

Kryo-Ultramikrotomie

Vorgehensweise:

Unter Kryobedingungen wurden mittels Diamantmesser Dünnschnitte mit einer Schnittdicke von ca. 70 nm hergestellt. Zur Verbesserung des Kontrastes wurde bei einzelnen Dünnschnitten mit $OsO_4$ kontrastiert.

Die Dünnschnitte wurden auf Kupfernetze übertragen, getrocknet und im TEM zunächst großflächig begutachtet. Daraufhin wurde mit 80 kV Beschleunigungsspannung bei geeigneter Vergrößerung eine Fläche von 833,7 nm * 828,8 nm eines charakteristischen Bildausschnittes mittels digitaler Bildsoftware zu Dokumentationszwecken gespeichert und ausgewertet.

Abb. 2. zeigt eine TEM-Aufnahme eines PUR-Systems (E), hergestellt aus einer Zusammensetzung und RC-DUR 120;
Maßstab 5 $\mu$m (5000 fach).
Abb. 3. zeigt eine TEM-Aufnahme eines PUR-Systems (E), hergestellt aus einer Zusammensetzung und RC-DUR 120; Maßstab 500 nm (50000 fach).

Die TEM-Aufnahmen zeigen, daß Partikel oder Partikelagglomerate mit Teilchendurchmessern hauptsächlich im Bereich von 50 nm bis 500 nm, bei einem mittleren Teilchendurchmesser von ca. 250 nm, vorliegen, wohingegen nach dem Einarbeiten der Mikrogele mittels Dissolver erfahrungsgemäß der mittlere Teilchendurchmesser bei ca. 120 nm (RFL 403A) liegt.

Die in diesem Beispiel direkt festgestellten Partikelgrößen stützen die im Beispiel 1 indirekt in der Kautschukgelpaste (D) mittels Laserdiffraktometrie (LD) bestimmten Werte.

Durch die besonders feine Verteilung der Mikrogele in der Kunststoffmatrix werden verbesserte Eigenschaften wie höhere Weiterreißfestigkeiten und höhere Schlagzähigkeiten erzielt.

**Beispiel 3**: Hydroxylgruppenmodifiziertes SBR-Gele (RFL 403B oder RFL 403A) in RC-Phen E 123

In dem nachfolgend beschriebenen Beispiel wird gezeigt, daß unter Verwendung von hydroxylgruppenmodifizierten Mikrogelen auf Basis von SBR Zusammensetzungen, die mit dem Homogenisator dispergiert wurden, nach der Aushärtung verbesserte Eigenschaften festzustellen sind, die durch die Nanopartikel bedingt sind.

In der nachfolgenden Tabelle ist beispielsweise die Zusammensetzung einer an Mikrogel neunzehnprozentigen Mikrogelpaste angegeben:

| 1. RC-Phen 123 | 75,127 |
|---|---|

(fortgesetzt)

| | |
|---|---|
| 2. Aktivatorgemisch | 0,0613 |
| 2. Byk-LP X 6331 | 0,283 |
| 3. RFL 403B | 18,868 |
| T-Paste | 5,660 |
| **Summe** | 100 |

Die verwendeten Abmischungen unterscheiden sich in der zugesetzten Mikrogelmenge und -art. Das Aktivatorgemisch besteht aus hauptsächlich RC-PUR Aktivator 105E und 50 Gew.-% Mesamoll (Bayer AG).

Bei RC-Phen E 123 handelt es sich um eine unaktivierte Polyolabmischung zur Herstellung von PUR im Kaltgießverfahren der Fa. RheinChemie Rheinau GmbH. Als Vernetzungskomponente wird RC-DUR 110, ein aromatisches Polyisocyanat der Fa. RheinChemie Rheinau GmbH, eingesetzt.

RC-PUR Aktivator 105E ist ein PU-Additiv der Fa. RheinChemie Rheinau GmbH.

Bei Byk-LP X 6331 handelt es sich um einen Entlüfter für PU-Systeme der Fa. Byk-Chemie GmbH.

RFL 403A ist ein vernetztes, oberflächenmodifiziertes Kautschukgel auf Basis SBR der Fa. RheinChemie Rheinau GmbH.

T-Paste ist ein füllstoffhaltiges Handelsprodukt der Fa. UOP. Für die Herstellung der Zusammensetzung wurde RC-Phen E 123 vorgelegt und das Aktivatorgemisch, Byk-LP X 6331, RFL 403A und T-Paste unter Rühren mittels Dissolver zugeben. Die Mischung wurde mindestens einen Tag lang stehen gelassen und dann mit dem Homogenisator weiterverarbeitet.

Die Zusammensetzung wurde bei Raumtemperatur in den Homogenisator gegeben und bei 900 bis 1000 bar im Batchbetrieb 2 mal durch den Homogenisator gegeben. Beim ersten Durchgang erwärmt sich die Mikrogelpaste auf ca. 40°C, beim zweiten Durchgang auf ca. 70°C.

Im Anschluß wurde die Zusammensetzung mit RC-DUR 110 zu einem Polymer umgesetzt, das zu der Klasse der Kaltgießelastomere gehört.

Durch die Zugabe der Mikrogele in die Polyolkomponente von RC-Phen E 123 werden besondere Eigenschaften wie eine verbesserte Weiterreißfestigkeit, Verstärkung, höhere Härte und höhere Rückprallelastizität erzielt (siehe nachfolgende Tabellen und Abbildungen).

Die Shore A-Härte wurde in Anlehnung an DIN 53505, die Rückprallelastizität in Anlehnung an DIN 53512, die Zugeigenschaften in Anlehnung an EN ISO 527-1 (Normstäbe S2 nach DIN 53504 präpariert) und die Weiterreißfestigkeit in Anlehnung an DIN 53515 bei Raumtemperatur (RT) (ca. 23°C) gemessen.

Tabelle. Spannung $\sigma_x$ bei 50%, 100% und 200% Dehnung für System "RC-Phen 123 - RFL 403A - RC DUR 110" ; RT (Handverarbeitung).

| Mikrogelgehalt [%] | Spannung $\sigma_{50}$ [MPa] | Spannung $\sigma_{100}$ [MPa] | Spannung $\sigma_{200}$ [MPa] | Bemerkungen |
|---|---|---|---|---|
| 0 | 0,7 | 1,0 | 1,5 | Dispergiert |
| 0 | 0,7 | 1,0 | 1,6 | Mit 2,2 % Omyalite 90 |
| 3,1 | 0,7 | 1,1 | 1,7 | Dispergiert |
| 6,1 | 0,9 | 1,3 | 2,1 | Dispergiert |
| 12 | 0,7 | 1,2 | 2,0 | Dispergiert |

Der verstärkende Effekt von RFL 403A wird an den Spannungen $\sigma_x$ bei 200% Dehnung deutlich.

Tabelle. Härte, Rückprallelastizität und Weiterreißfestigkeit für das System RC-Phen 123 -RFL 403A - RC DUR 110; RT (Handverarbeitung).

| Mikrogelgehalt [%] | Härte [ShA] | Rückprallelastizität bei 20°C [%] | Bemerkungen |
|---|---|---|---|
| 0 | 46 | 49 | dispergiert |
| 0 | 47 | 50 | Mit 2,2 % Omyalite 90 |

(fortgesetzt)

| Mikrogelgehalt [%] | Härte [ShA] | Rückprallelastizität bei 20°C [%] | Bemerkungen |
|---|---|---|---|
| 3,1 | 50 | 52 | dispergiert |
| 6,1 | 52 | 50 | dispergiert |
| 12 | 49 | 51 | dispergiert |

Interessant ist der Anstieg der Rückprallelastizität, obwohl das System RC-Phen E 123 schon hochelastisch ist; allerdings ist der Anstieg gering.

Tabelle. Spannung $\sigma_x$ bei 50%, 100%, 200% und 300% Dehnung für das System "RC-Phen 123 - RFL 403 B - RC DUR110"; RT (Maschinenverarbeitung).

| Mikrogelgehalt [%] | Spannung $\sigma_{50}$ [MPa] | Spannung $\sigma_{100}$ [MPa] | Spannung $\sigma_{200}$ [MPa] | Spannung $\sigma_{300}$ [MPa] | $\sigma_{300}/\sigma_{100}$ | Bruchspannung $\sigma_B$ [MPa] |
|---|---|---|---|---|---|---|
| 0 | 0,7 | 1,1 | 1,7 | 2,5 | 2,3 | 4,6 |
| 2,5 | 0,8 | 1,2 | 2,0 | 3,1 | 2,6 | 6,8 |
| 5 | 0,9 | 1,4 | 2,3 | 3,6 | 2,6 | 6,3 |
| 7,5 | 0,9 | 1,4 | 2,4 | 3,8 | 2,7 | 7,6 |
| 20 | 1,5 | 2,3 | 4,1 | 6,5 | 2,8 | 10,1 |
| 25 | 2,2 | 3,4 | 6 | 9,7 | 2,9 | 10,3 |

Der verstärkende Effekt von RFL 403B ist sehr stark bei allen Dehnungen ausgeprägt.

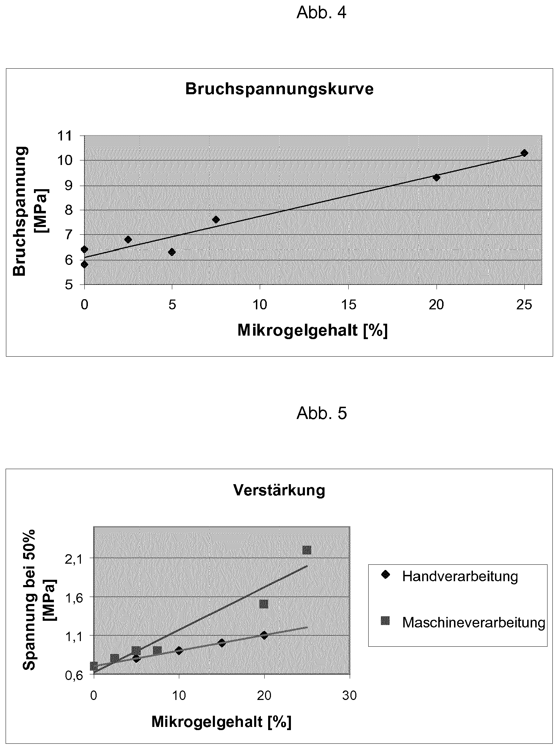

Abb. 4. zeigt die Bruchspannungskurve für das System "RC-Phen 123 - RFL 403B - RC DUR 110"; RT (Maschinenverarbeitung).

Abb. 5. zeigt die Verstärkung bei 50% Dehnung für das System "RC-Phen 123 - RFL 403 B - RC DUR 110"; RT.

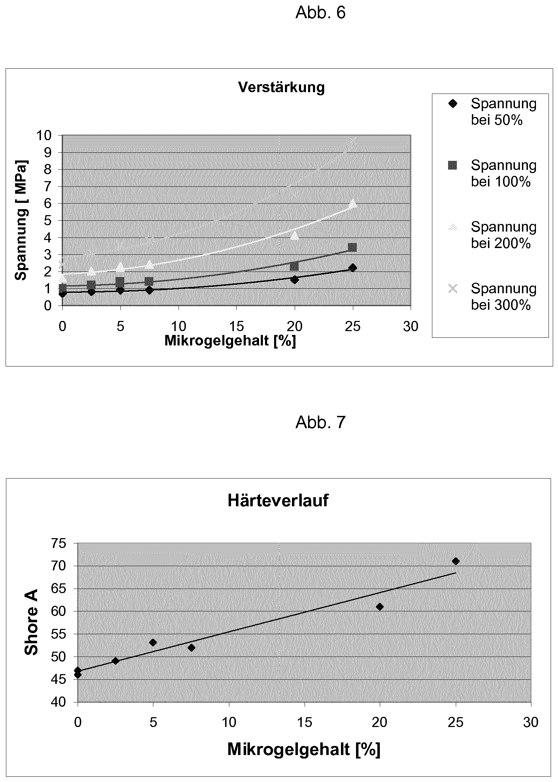

Abb. 6. zeigt die Verstärkung für das System "RC - Phen 123 - RFL 403B - RC-DUR 110"; RT (Maschinenverarbeitung).

Abb. 7. zeigt den Härteverlauf am System "RC-Phen 123 - RFL 403B - RC DUR 110; RT (Maschinenverarbeitung).Abb. 7 zeigt, dass die Härte durch Zugabe von Mikrogel von 46 Shore A auf 71 Shore A ansteigt.

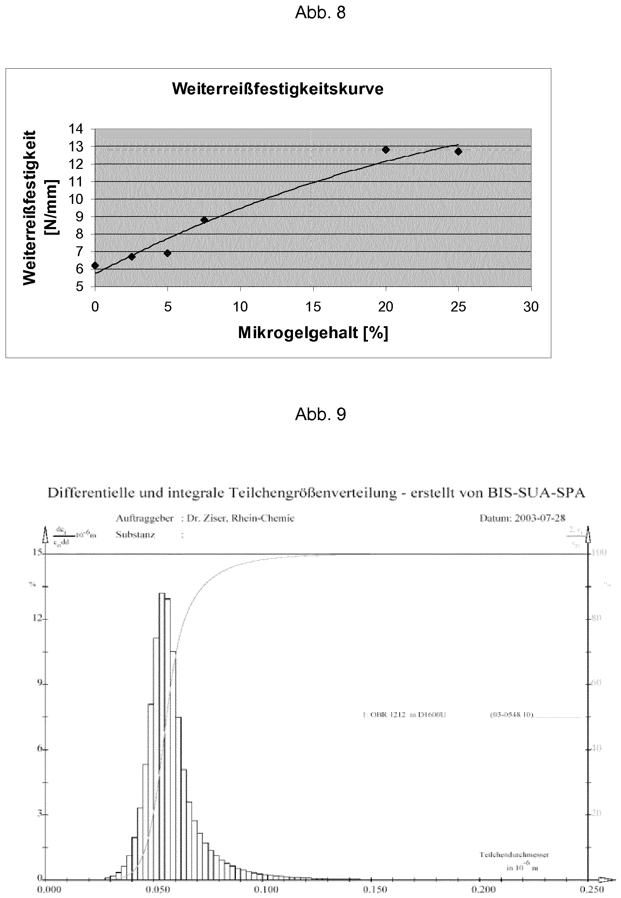

Abb. 8. Weiterreißfestigkeit vom System "RC-Phen123- RFL 403B - RC DUR110; RT (Maschinenverarbeitung).

Abb. 8 zeigt, dass die Weiterreißfestigkeit durch Zugabe von Mikrogel von 6 Nmm$^{-1}$ auf 13 Nmm$^{-1}$ ansteigt.

**Beispiel 4:** Hydroxylgruppenmodifiziertes SBR-Gele (OBR 1212) in Desmophen 1600U

In dem nachfolgend beschriebenen Beispiel wird gezeigt, daß unter Verwendung von hydroxylgruppenmodifizierten Mikrogelen auf Basis von SBR Zusammensetzungen, die hauptsächlich Primärpartikel mit einem mittleren Teilchendurchmesser hauptsächlich von ca. 60 nm enthalten, in einem Homogenisator durch Anwendung von 900 bis 1000 bar hergestellt werden können.
In der nachfolgenden Tabelle ist die Zusammensetzung der Mikrogelpaste angegeben:

| 1. Desmophen 1600U | 90,000 |
|---|---|
| 2. OBR 1212 | 10,000 |
| Summe | 100,000 |

Bei Desmophen 1600U handelt es sich um ein Handelsprodukt/Polyol (Polyether) der Bayer AG.

OBR 1212 ist ein vernetztes, oberflächenmodifiziertes Kautschukgel auf Basis SBR der Fa. RheinChemie Rheinau GmbH. OBR 1212 besteht aus 46,5 Gew.-% Butadien, 31 Gew.-% Styrol, 12,5 Gew.-% Trimethylolpropantrimethacrylat (TMPTMA) und 10 Gew.-% Hydroxyethylmethacrylat (HEMA). OBR 1212 wurde analog RFL 403 A hergestellt.

Für die Herstellung der Zusammensetzung wurde Desmophen 1600U vorgelegt und OBR 1212 unter Rühren mittels Dissolver zugeben. Die Mischung wurde mindestens einen Tag lang stehen gelassen und dann mit dem Homogenisator weiterverarbeitet.

Die Zusammensetzung wurde bei Raumtemperatur in den Homogenisator gegeben und bei 900 bis 1000 bar im Batchbetrieb 4 mal durch den Homogenisator gegeben. Beim ersten Durchgang erwärmt sich die Mikrogelpaste auf ca. 40°C, beim zweiten Durchgang auf ca. 70°C. Danach wurde Mikrogelpaste auf Raumtemperatur abgekühlt und ein drittes und viertes Mal dispergiert.

Der Teilchendurchmesser der Latexteilchen wird mittels Ultrazentrifugation bestimmt (W. Scholtan, H. Lange, "Bestimmung der Teilchengrößenverteilung von Latices mit der Ultrazentrifuge", Kolloid-Zeitschrift und Zeitschrift für Polymere (1972) Band 250, Heft, 8).

Abb. 9. zeigt die differentielle und integrale Teilchengrößenverteilung von OBR 1212 in Desmophen 1600U.

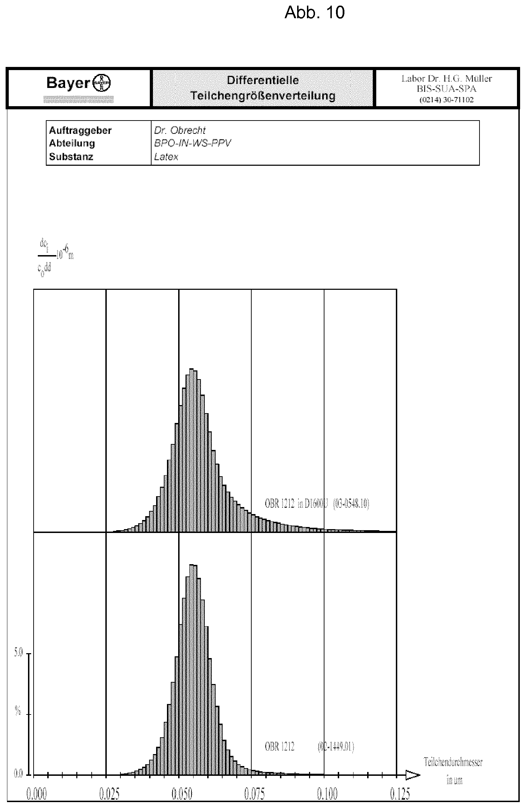

In Abb. 9 wird deutlich, dass es gelungen ist, festes OBR 1212 in Desmophen 1600U zu redispergieren. Der mittlere Teilchendurchmesser des OBR-Latex und des redispergierten OBR 1212 unterscheiden sich kaum (s. Abb. 10). In beiden Materialien liegen vor allem Primärpartikel vor.
Abb. 10. Differentielle Teilchengrößenverteilung von OBR 1212-Latex und von OBR 1212, in Desmophen 1600U redispergiert, im Vergleich.

**Beispiel 5:** Hydroxylgruppenmodifizierte SBR-Gele mit Glastemperaturen unter 20°C in RC-Phen E 123

In dem nachfolgend beschriebenen Beispiel wird gezeigt, daß unter Verwendung von hydroxylgruppenmodifizierten Mikrogelen auf Basis von SBR in Zusammensetzungen, die mit dem Homogenisator dispergiert wurden, nach der Aushärtung verbesserte Eigenschaften festzustellen sind, die durch die Mikrogele bedingt sind.

In der nachfolgenden Tabelle ist beispielsweise die Zusammensetzung einer an Mikrogel fünfzehnprozentigen Mikrogelpaste angegeben (Angaben in Gew.-%):

| | |
|---|---|
| 1. RC-Phen 123 | 79,30 |
| 2. Aktivatorgemisch | 0,065 |
| 3. Mikrogel* | 15,00 |
| 4. T-Paste | 5,635 |
| **Summe** | 100 |

* Mikrogel auf Basis von SBR mit unterschiedlichen Hydroxylgehalten (resultierend aus HEMA-Zusatz)

T-Paste ist ein Handelsprodukt der Fa. UOP.

Die verwendeten Abmischungen unterscheiden sich in der zugesetzten Mikrogelmenge und -art. Bei RC-Phen E 123 handelt es sich um eine unaktivierte Polyolabmischung zur Herstellung von PUR im Kaltgießverfahren der Fa. RheinChemie Rheinau GmbH. Als Vernetzungskomponente wird RC-DUR 110, ein aromatisches Polyisocyanat der Fa. RheinChemie Rheinau GmbH, eingesetzt. Das Aktivatorgemisch besteht aus hauptsächlich RC-PUR Aktivator 105E und 50 Gew.-% Mesamoll. RC-PUR Aktivator 105E ist ein PU-Additiv der Fa. RheinChemie Rheinau GmbH. Die Mikrogele OBR 1211, OBR 1212 und OBR 1223 sind vernetzte, oberflächenmodifizierte Kautschukgele auf Basis SBR der Fa. RheinChemie Rheinau GmbH. Die Mikrogele werden analog zu Beispiel 1 für RFL 403 A hergestellt (s. folgende Tabelle).

Die Dichte von RC-Phen E 123 beträgt 1,0 g/ml; die Dichte von Mikrogelen liegt üblicherweise bei ca. 0,96 g/ml, d. h. durch die Einarbeitung von Mikrogelen, im Gegensatz zu anorganischen Füllstoffen, in Polyole ändert sich deren Dichte kaum.

Tabelle. Zusammensetzung der Mikrogele OBR 1211, OBR 1212 und OBR 1223.

| Bezeichnung | Butadien | Styrol | TMPTMA | HEMA | Bemerkungen |
|---|---|---|---|---|---|
| OBR 1211 | 49,5 | 33 | 12,5 | 5 | - |
| OBR 1212 | 46,5 | 31 | 12,5 | 10 | - |

(fortgesetzt)

| Bezeichnung | Butadien | Styrol | TMPTMA | HEMA | Bemerkungen |
|---|---|---|---|---|---|
| OBR 1223 | 49,5 | 33 | 12,5 | 0 | anstelle HEMA -> 4,5 phm Ethoxyethylenglykolmethacrylat |

Für die Herstellung der Zusammensetzung wurde RC-Phen E 123 vorgelegt und das jeweilige OBR-Mikrogel unter Rühren mittels Dissolver zugeben. Die Mischung wurde mindestens einen Tag lang stehen gelassen und dann mit dem Homogenisator weiterverarbeitet. Die Zusammensetzung wurde bei Raumtemperatur in den Homogenisator gegeben und bei 900 bis 1000 bar im Batchbetrieb viermal durch den Homogenisator gegeben. Beim ersten Durchgang erwärmt sich die Mikrogelpaste auf ca. 40°C, beim zweiten Durchgang auf ca. 70°C. Danach wurde die Mikrogelpaste auf Raumtemperatur durch Stehenlassen abgekühlt und der Vorgang wiederholt, bis vier Durchgänge erreicht worden sind. Im Anschluß wurde das Aktivatorgemisch und T-Paste zugegeben. Die Aktivatormenge wurde jeweils so gewählt, dass eine Verarbeitungszeit von ca. 3 min erreicht wurde. Die Zusammensetzung wurde mit RC-DUR 110 (Anhand der analytisch am System Mikrogel + Polyol bestimmten Hydroxylzahlen wurde die Isocyanatmenge so gewählt, dass jeweils ein 6-%iger Überschuß eingesetzt wurde) zu einem Polymer umgesetzt, das zu der Klasse der Kaltgießelastomere gehört.

Durch die Zugabe der Mikrogele in der Polyolkomponente von RC-Phen E 123 werden die unten beschriebenen Eigenschaften erreicht (siehe folgende Tabellen).

Die Shore A-Härte wurde in Anlehnung an DIN 53505, die Rückprallelastizität in Anlehnung an DIN 53512, die Zugeigenschaften in Anlehnung an EN ISO 527-1 (Normstäbe S2 nach DIN 53504 präpariert) und die Weiterreißfestigkeit in Anlehnung an DIN 53515 bei Raumtemperatur (ca. 23°C) gemessen.

Tabelle. Härte, Weiterreißfestigkeit und Rückprallelastizität des Systems "RC-Phen 123 - OBR-Mikrogel - RC DUR 110; RT.

| Bezeichnung | Mikrogelgehalt [%] | Shore A [ ] | Weiterreißfestigkeit [N/mm] | Rückprallelastizität [%] |
|---|---|---|---|---|
| RC- Phen 123-43 | 0% (undispergiert) | 52 | 5,1 | 47,8 |
| RC- Phen 123-42 | 0% (dispergiert) | 52 | 5,4 | 47,2 |
| RC-Phen 123-30 | 5% OBR1211 | 53 | 5,1 | 45,6 |
| RC-Phen 123-34 | 5% OBR1212 | 53 | 5,0 | 46,8 |
| RC-Phen 123-33 | 15% OBR1223 | 52 | 5,3 | 45,5 |

Aus vorstehender Tabelle ist ersichtlich, dass die untersuchten Niedrig-$T_g$-Mikrogele kaum Änderungen im elastomeren Polyurethan (PU) bewirken, wobei jedoch wie unten gezeigt wird, Vorteile im Viskositätsverhalten resultieren.

Tabelle. Spannung bei 50%, 100%, 200% und 300% Dehnung für die Systeme "RC-Phen 123 - OBR-Mikrogel - RC DUR 110"; Raumtemperatur (RT).

| Bezeichnung | Mikrogelgehalt [%] | Spannung $\sigma_{50}$ [MPa] | Spannung $\sigma_{100}$ [MPa] | Spannung $\sigma_{200}$ [MPa] | Spannung $\sigma_{300}$ [MPa] | $\sigma_{300}/\sigma_{100}$ | Bruchspannung $\sigma_B$ [MPa] |
|---|---|---|---|---|---|---|---|
| RC- Phen 123-43 | 0% (undispergiert) | 0,94 | 1,3 | 2,1 | 3,1 | 2,4 | 4,4 |
| RC- Phen 123-42 | 0% (dispergiert) | 0,99 | 1,4 | 2,2 | 3,3 | 2,4 | 4,6 |
| RC- Phen 123-30 | 5% OBR1211 | 0,94 | 1,4 | 2,3 | 3,7 | 2,6 | 4,7 |
| RC- Phen 123-34 | 5% OBR1212 | 0,88 | 1,3 | 2,1 | 3,5 | 2,7 | 3,6 |
| RC- Phen 123-33 | 15% OBR1223 | 0,87 | 1,3 | 2,1 | 3,2 | 2,5 | 4,2 |

Die untersuchten Niedrig-$T_g$-Mikrogele zeigen, dass das Verhältnis der Spannungswerte bei 300 % Dehnung und 100 % Dehnung gegenüber mikrogelfreien PU erhöht ist.

Diese Mikrogele können vorteilhaft eingesetzt werden, um die Rheologie der Polyolkomponente zu modifizieren, wobei die Dichte des Systems nahezu unverändert bleibt.

Tabelle. Rheologieverhalten: Viskosität $\eta$ bei verschiedenen Schergeschwindigkeiten $v$ für die Systeme "RC-Phen 123 - OBR-Mikrogel"; 20°C.

| Bezeichnung | Charakteristika Mikrogelgehalt | Viskosität $\eta$ bei $v$=5 sec$^{-1}$ (20°C) | Viskosität $\eta$ $v$=100 sec$^{-1}$ (20°C) | Viskosität $\eta$ $v$=1000 sec$^{-1}$ (20°C) | Viskosität $\eta$ $v$=0,1 sec$^{-1}$ (20°C) |
|---|---|---|---|---|---|
| | | [mPas] | [mPas] | [mPas] | [mPas] |
| RCPhen123-42 | 2x940bar (0%) | 1150 | 1170 | 1170 | Nicht bestimmt |
| RCPhen123-30 | 2x940bar OBR1211 (5%) | 2450 | 1880 | 1580 | Nicht bestimmt |
| RCPhen123-30 | 4x990bar OBR1211 (5%) | 2570 | 1900 | 1580 | Nicht bestimmt |
| RCPhen123-34 | 2x970bar OBR1212(5%) | 1600 | 1550 | 1500 | Nicht bestimmt |
| RCPhen123-34 | 4x940bar OBR1212(5%) | 1540 | 1480 | 1460 | Nicht bestimmt |
| RCPhen123-33 | 2x950bar OBR1223 (15%) | 26900 | 3370 | 2440 | 19600 |
| RCPhen123-33 | 4x960bar OBR1223 (15%) | 15400 | 3270 | 2390 | 16000 |

Das Mikrogelfreie RC-Phen 123 zeigt newton'sches Fließverhalten; auch das an OBR 1212 fünfprozentige RC-Phen 123 besitzt in erster Näherung newton'sches Fließverhalten.

Das an OBR 1223 fünfzehnprozentige RC-Phen 123 ist stark thixotrop.

Tabelle. Viskosität $\eta$ bei verschiedenen Schergeschwindigkeiten $v$ für die Systeme "RC-Phen 123 - OBR-Mikrogel 1212 bzw. OBR 1223"; 20°C.

| Bezeichnung | Charakteristika | Viskosität $\eta$ bei $v$=5 sec$^{-1}$ (20°C) | Viskosität $\eta$ $v$=100 sec$^{-1}$ (20°C) | Viskosität $\eta$ $v$=1000 sec$^{-1}$ (20°C) | Viskosität $\eta$ $v$=0,1 sec$^{-1}$ (20°C) | Quotient $\eta$ (0,1 sec$^{-1}$) / $\eta$ (1000 sec$^{-1}$) |
|---|---|---|---|---|---|---|
| | | [mPas] | [mPas] | [mPas] | [mPas] | [ ] |
| RCPhen123-34MV | OBR1212 (5%) Dissolver | 20600 | 2580 | 1740 | 120000 | 69,0 |
| RCPhen123-34MV | OBR1212 (5%) 1x970bar | 1910 | 1770 | 1660 | 3090 | 1,9 |
| RC-Phen 123-35MV[ohne Aktivator] | OBR1212 (15%) Dissolver | 54700 | 4100 | 2240 | 116000 | 51,8 |
| RC-Phen 123-35MV[ohne Aktivator] | OBR1212 (15%) 1x950bar | 2600 | 2310 | 2150 | 1270 | 0,6 |

(fortgesetzt)

| Bezeichnung | Charakteristika | Viskosität η bei ν=5 sec⁻¹ (20°C) | Viskosität η ν=100 sec⁻¹ (20°C) | Viskosität η ν=1000 sec⁻¹ (20°C) | Viskosität η ν=0,1 sec⁻¹ (20°C) | Quotient η (0,1 sec⁻¹) / η (1000 sec⁻¹) |
|---|---|---|---|---|---|---|
| | | [mPas] | [mPas] | [mPas] | [mPas] | [ ] |
| RC-Phen 123-35MV$^{ohne\ Aktivator}$ | OBR1212 (15%) 3x950bar | 3090 | 2770 | 2630 | 2110 | 0,8 |
| RC-Phen 123-33MV$^{mit\ Aktivator}$ | OBR1223 (15%) Dissolver | 602000 (bei 5,32s⁻¹) | 4510 | 2340 | 72200 | 30,9 |
| RC-Phen 123-33MV$^{mit\ Aktivator}$ | OBR1223 (15%) 1x960bar | 57900 | 3220 | 2390 | 25100 | 10,5 |
| RC-Phen 123-33MV$^{mit\ Aktivator}$ | OBR1223 (15%) 3x960bar | 12000 | 2730 | 2240 | 15400 | 6,9 |

Aus vorstehender Tabelle ist ersichtlich, dass die Verdickung (Thixotropie oder Strukturviskosität) für die undispergierten Mischungen am ausgeprägtesten ist. OBR 1212 wird schon bei einem Gang durch den Homogenisator gut dispergiert, so dass die resultierenden Viskositäten der Mischungen niedrig und untereinander sogar bei 15% OBR 1212 ähnlich sind.

OBR 1223 verdickt deutlich stärker als OBR 1212; die Mischungen sind stark thixotrop. Dies zeigt, dass das rheologische Verhalten von der Natur des Mikrogels abhängt. Dies kann dazu benutzt werden, das rheologische Verhalten durch Auswahl des Mikrogels in einfacher Weise zu beeinflussen.

Im Gegensatz zu diesen Mikrogelen werden im nächsten Beispiel Mikrogele mit Glastemperaturen über Raumtemperatur in RC-Phen E 123 beschrieben.

**Beispiel 6:** Hydroxylgruppenmodifizierte Mikrogele mit Glastemperaturen über Raumtemperatur (20°) in RC-Phen E 123

In dem nachfolgend beschriebenen Beispiel wird gezeigt, daß an unter Verwendung von hydroxylgruppenmodifizierten Mikrogelen auf Basis von SBR, SNBR und Acrylnitril Zusammensetzungen, die mit dem Homogenisator dispergiert wurden, nach der Aushärtung verbesserte Eigenschaften festzustellen sind, die durch die Nanopartikel bedingt sind.

In der nachfolgenden Tabelle sind beispielsweise Zusammensetzungen verschiedener Mikrogelpasten angegeben:

|   |   |   |   |   |   |   |
|---|---|---|---|---|---|---|
| 1. | RC-Phen 123 | 89,98 | 74,955 | 89,97 | 79,85 | 74,8 |
| 2. | Aktivatorgemisch | 0,02 | 0,045 | 0,03 | 0,15 | 0,2 |
| 3. | SBR-Mikrogel | 5,00 | 20,00 | | | |
| 4. | ACN-Mikrogele | | | 5,00 | 15,00 | 20,00 |
| 5. | L-Paste | 5,00 | 5,00 | 5,00 | 5,00 | 5,00 |
| | **Summe** | 100 | 100 | 100 | 100 | 100 |
| | **Vernetzer RC-DUR 110** | ca. 28,3 | ca. 24,1 | ca. 28,3 | 25,6 | ca. 23,9 |

Bei RC-Phen E 123 handelt es sich um eine unaktivierte Polyolabmischung zur Herstellung von PUR im Kaltgießverfahren der Fa. RheinChemie Rheinau GmbH. Als Vernetzungskomponente wird RC-DUR 110, ein aromatisches Polyisocyanat der Fa. RheinChemie Rheinau GmbH, eingesetzt. Das Aktivatorgemisch besteht aus 10% RC-PUR Aktivator 201N und 90 Gew.-% Mesamoll (Bayer AG). RC-PUR Aktivator 201N ist ein PU-Additiv der Fa. RheinChemie Rheinau GmbH .

Die Mikrogele sind vernetzte, oberflächenmodifizierte Kautschukgele auf Basis SBR, ACN oder SNBR der Fa. Rhein-Chemie Rheinau GmbH. Die Mikrogele werden hergestellt wie in Beispiel 1 für RFL 403 A beschrieben.

Tabelle: Zusammensetzung der verwendeten Hoch-$T_g$-Mikrogele.

| Bezeichnung | Acrylnitril | Butadien | Styrol | TMPTMA[1] | HEMA[2] | Bemerkungen |
|---|---|---|---|---|---|---|
| OBR 1318A | - | 11,3 | 75,7 | 3 | 10 | |
| OBR 1318B | 10 | 10,1 | 66,9 | 3 | 10 | |
| OBR 1319B | - | 12,0 | 80,0 | 3 | 5 | |
| | | | | | | |
| Micromorph 1P | - | 12 | 80 | - | 3 | 5 EGDMA[3] |
| Micromorph 1P[5] | - | 12 | 80 | - | 3 | Mit 5 Gew.-% Levasil 300/30 (s/s) |
| Micromorph 1P[5] | - | 12 | 80 | - | 3 | Mit 10 Gew.-% Levasil 300/30 (s/s) |
| Micromorph 1P[5] | - | 12 | 80 | - | 3 | Mit 25 Gew.-% Levasil 300/30 (s/s) |
| OBR 1163 | - | 46,2 | 30,8 | - | 3 | 20 DVB[4] |
| | | | | | | |
| OBR 1287 | 84 | - | - | 6 | 10 | |
| OBR 1288 | 88,5 | - | - | 1,5 | 10 | |
| OBR 1295 | 94 | - | - | 6 | - | |
| 1) Trimethylolpropantrimethacrylat<br>2) 2-Hydroxyethylmethacrylat<br>3) Ethylenglykoldimethacrylat<br>4) Divinylbenzol<br>5) Herstellung durch Mischen von Micromorph 1L (Latex) und Levasil 300/30 und anschließende Sprühtrocknung. Um den Latex zu stabilisieren, wurde 1% Acticide MBS zugesetzt. | | | | | | |

L-Paste ist ein Handelsprodukt der Fa. UOP. Levasil 300/30 ist ein Handelsprodukt von H.C. Starck. Acticide MBS ist ein Handelsprodukt der Thor GmbH.

Für die Herstellung der Zusammensetzung wurde RC-Phen E 123 vorgelegt und, das jeweilige OBR-Mikrogel unter Rühren mittels Dissolver zugeben. Die Mischung wurde mindestens einen Tag lang stehen gelassen und dann mit dem Homogenisator weiterverarbeitet. Die Zusammensetzung wurde bei Raumtemperatur in den Homogenisator gegeben und bei 900 bis 1000 bar im Batchbetrieb sechsmal durch den Homogenisator gegeben. Beim ersten Durchgang erwärmt sich die Mikrogelpaste auf ca. 40°C, beim zweiten Durchgang auf ca. 70°C. Danach wurde die Mikrogelpaste auf Raumtemperatur durch Stehenlassen abgekühlt und der Vorgang wiederholt, bis sechs Durchgänge erreicht worden sind. Im Anschluß wurde Aktivatorgemisch und L-Paste zugegeben. Die Aktivatormenge wurde jeweils so gewählt, dass eine Verarbeitungszeit von ca. 3 min erreicht wurde. Die Zusammensetzung wurde mit RC-DUR 110 (Anhand der analytisch am System Mikrogel + Polyol bestimmten Hydroxylzahlen wurde die Isocyanatmenge so gewählt, dass jeweils ein 6-%iger Überschuß eingesetzt wurde) zu einem Polymer umgesetzt, das zu der Klasse der Kaltgießelastomere gehört.

Durch die Zugabe der Mikrogele in die Polyolkomponente von RC-Phen E 123 werden die unten beschriebenen Eigenschaften (siehe nachfolgende Tabelle) erhalten.

Die Shore A-Härte wurde in Anlehnung an DIN 53505, die Rückprallelastizität in Anlehnung an DIN 53512, die Zugeigenschaften in Anlehnung an EN ISO 527-1 (Normstäbe S2 nach DIN 53504 präpariert), der Druckverformungsrest in Anlehnung an DIN 53517 und die Weiterreißfestigkeit in Anlehnung an DIN 53515 bei Raumtemperatur (ca. 23°C) gemessen.

Tabelle. Härte nach Shore A, Rückprallelastizität, Bruchdehnung $\delta_{max}$, maximale Spannung $\sigma_{max}$, Weiterreißfestigkeit und $\sigma_{300}/\sigma_{100}$ für die Systeme "RC-Phen 123 - Mikrogel - RC DUR 110", geordnet nach Mikrogel und Mikrogeltyp; 23°C.

| Mikrogel | Mikrogelmenge % | Herstellung | Shore-Härte A | Rückprallelastizität | Dehnung $\delta_{max}$ (200mm/min; 23°C) | Spannung $\sigma_{max}$ (200mm/min; 23°C) | Weiterreißfestigkeit (Prüfgeschwindigkeit 500mm/min; 23°C) | Quotient der Spannungswerte $\sigma_{300}/\sigma_{100}$ |
|---|---|---|---|---|---|---|---|---|
| | | | | [%] | [%] | [MPa] | [N/mm] | [ ] |
| | | | | | | | | |
| - | 0 | 6 x 950 bar | 55 | 54,4 | 424 | 3,5 | 5,5 | 2,2 |
| - | 0 | Dissolver | 54 | 52,3 | 442 | 4,8 | 5,6 | 2,2 |
| | | | | | | | | |
| M.1P | 5 | 6 x 950 bar | 61 | 52,8 | 437 | 6,0 | 7,2 | 2,3 |
| M. 1P (20%) | 20 | 6 x 950 bar | 72 | 44,6 | 298 | 6,3 | 9,8 | 2,2 |
| M. 1P / 5% Levasil | 5 | 6 x 950 bar | 58 | 52,5 | 386 | 5,1 | 6,7 | 2,4 |
| M. 1P / 5% Levasil | 20 | 6 x 950 bar | 72 | 42,9 | 301 | 8,5 | 8,7 | 2,6 |
| M. 1P / 10% Levasil | 5 | 6 x 950 bar | 61 | 50 | 251 | 4,1 | 5,0 | - |
| M. 1P / 10% Levasil | 20 | 6 x 950 bar | 65 | 36,6 | 281 | 6,3 | 7,0 | 2,7 |
| Mikrogel | Mikrogelmenge % | Herstellung | Shore-Härte A | Rückprallelastizität | Dehnung $\delta_{max}$ | Spannung $\sigma_{max}$ | Weiterreißfestigkeit (Prüfgeschwindigkeit 500mm/min; 23°C) | Quotient der Spannungswerte $\sigma_{300}/\sigma_{100}$ |
| M. 1P / 30% Levasil | 5 | 6 x 950 bar | 60 | 47,8 | 176 | 2,3 | 5,0 | - |

EP 1 664 158 B1

(fortgesetzt)

| Mikrogel | Mikrogelmenge % | Herstellung | Shore-Härte A | Rückprallelastizität | Dehnung $\delta_{max}$ | Spannung $\sigma_{max}$ | Weiterreißfestigkeit (Prüfgeschwindigkeit 500mm/min; 23°C) | Quotient der Spannungswerte $\sigma_{300}/\sigma_{100}$ |
|---|---|---|---|---|---|---|---|---|
| M. 1P / 30% Levasil | 20 | 6 x 950 bar | 63 | 37,2 | 273 | 4,7 | 6,1 | 2,5 |
| OBR 1163 | 5 | 6 x 950 bar | 61 | 52,1 | 403 | 5,5 | 7,4 | 2,3 |
| OBR 1163 | 20 | 6 x 950 bar | 70 | 41,1 | 350 | 8,6 | 9,7 | 2,8 |
| OBR 1318A | 5 | 6 x 950 bar | 58 | 52,6 | 381 | 5,5 | 5,4 | 2,5 |
| OBR 1318A | 20 | 6 x 950 bar | 67 | 43,7 | 268 | 7,9 | 5,7 | 3,7 |
| OBR 1318B | 5 | 6 x 950 bar | 58 | 54 | 381 | 5,2 | 5,5 | 2,5 |
| OBR 1318B | 20 | 6 x 950 bar | 68 | 45,9 | 273 | 6,7 | 7,0 | 4,5 |
| OBR 1319B | 5 | 6 x 950 bar | 61 | 52,7 | 300 | 3,9 | 6,8 | 2,3 |
| ACN-Gele | | | | | | | | |
| OBR 1287 | 5 | 6 x 950 bar | 62 | 52,4 | 536 | 9,7 | 7,0 | 2,4 |
| OBR 1287 | 15 | 6 x 950 bar | 67 | 45,2 | 346 | 8,4 | 8,3 | 2,9 |
| OBR 1288 | 5 | 6 x 950 bar | 61 | 52,2 | 415 | 6,0 | 7,0 | 2,4 |
| OBR 1288 | 20 | 6 x 950 bar | 69 | 45,5 | 373 | 13,3 | 8,2 | 3,3 |

(fortgesetzt)

| ACN-Gele | | | | | | | | |
|---|---|---|---|---|---|---|---|---|
| OBR 1295 | 5 | 6 x 950 bar | 61 | 51,3 | 479 | 6,6 | 7,4 | 2,2 |
| OBR 1295 | 15 | 6 x 950 bar | 58 | 45,6 | 643 | 7,9 | 8,8 | 1,9 |

Die vorstehende Tabelle zeigt, dass durch Art und Menge der verwendeten Mikrogele die Weiterreißfestigkeit, die Verstärkungswirkung, die Shore A-Härte und die Rückprallelastizität der erhaltenen Mikrogel-enthaltenden Polymerzusammensetzungen beeinflusst werden.

Tabelle: Druckverformungsrest (DVR), Dauer 24 h / Temperatur 100°C für einige Systeme "RC-Phen 123 - Mikrogel - RC DUR 110"; Meßtemperatur: 23°C.

| Probe | Ursprüngliche Höhe [mm] | Höhe nach Entspannung [mm] | DVR [%] | Mittelwert DVR [%] |
|---|---|---|---|---|
| 0%, homogenisiert | 6,1 | 5,61 | 32,0 | 32,4 |
| | 6,16 | 5,64 | 32,7 | |
| OBR 1318A (20%) | 6,09 | 5,80 | 19,1 | 19,4 |
| | 6,15 | 5,84 | 19,6 | |
| M. 1P / 5% Levasil (20%) | 6,09 | 5,79 | 19,7 | 19,3 |
| | 6,11 | 5,82 | 18,8 | |

In der vorstehenden Tabelle wird gezeigt, dass hydroxylmodifizierte Mikrogele positive Druckverformungsreste der erhaltenen Mikrogel-enthaltenden Polymerzusammensetzungen liefern können.

**Patentansprüche**

1. Verfahren zur Herstellung von Mikrogel-enthaltenden Polymerzusammensetzungen, welches das Mischen mindestens eines vernetzbarens, organischen Mediums (A), welches bei einer Temperatur von 120 °C eine Viskosität von weniger als 30000 mPas aufweist, und mindestens eines Mikrogels (B), das nicht durch elektromagnetische Strahlung einer Wellenlänge von weniger als 0.1 um vernetzt ist, und **dadurch gekennzeichnet, dass** die Primärpartikel des Mikrogels (B) eine durchschnittliche Teilchengröße von weniger als 99 nm aufweisen und -dass die Mikrogele (B) in Toluol bei 23°C unlösliche Anteile von mindestens 90 Gew.-% aufweisen zu einer Zusammensetzung, enthaltend (A) und (B), die anschließende Zugabe eines Vernetzungsmittels (C) für das vernetzbare Medium (A) und das anschließende Vernetzen der Zusammensetzung umfasst.

2. Verfahren nach Anspruch 1, worin das vernetzbare, organische Medium (A) bei einer Temperatur von 120°C eine Viskosität von weniger als 10000 mPas aufweist.

3. Verfahren nach Anspruch 1, worin das vernetzbare, organische Medium (A) bei einer Temperatur von 120°C eine Viskosität von weniger als 1000 mPas aufweist.

4. Verfahren nach einem der Ansprüche 1 bis 3, **dadurch gekennzeichnet, dass** die Primärpartikel des Mikrogels (B) eine annähernd kugelförmige Geometrie aufweisen.

5. Verfahren nach Ansprüche 1 oder 4, **dadurch gekennzeichnet, dass** die Abweichung der Durchmesser eines einzelnen Primärpartikels des Mikrogels (B), definiert als

$$[ (d1 - d2) / d2] \times 100,$$

worin d1 und d2 zwei beliebige Durchmesser des Primärpartikels sind und d1 > d2 ist, weniger als 250 % beträgt.

6. Verfahren nach einem der Ansprüche 1 bis 5, **dadurch gekennzeichnet, dass** die Mikrogele (B) in Toluol bei 23°C einen Quellungsindex von weniger als etwa 80 aufweisen.

7. Verfahren nach einem der Ansprüche 1 bis 6, **dadurch gekennzeichnet, dass** die Mikrogele (B) Glastemperaturen von -100°C bis +120°C aufweisen.

8. Verfahren nach einem der Ansprüche 1 bis 7, **dadurch gekennzeichnet, dass** die Mikrogele (B) eine Breite des Glasübergangsbereichs von größer als etwa 5 °C aufweisen.

9. Verfahren nach einem der Ansprüche 1 bis 8, **dadurch gekennzeichnet, dass** die Mikrogele (B) durch Emulsionspolymerisation erhältlich sind.

10. Verfahren nach einem der Ansprüche 1 bis 9, **dadurch gekennzeichnet, dass** das Mikrogel (B) auf Kautschuk basiert.

11. Verfahren nach einem der Ansprüche 1 bis 10, **dadurch gekennzeichnet, dass** das Mikrogel (B) auf Homopolymeren oder statistischen Copolymeren basiert.

12. Verfahren nach einem der Ansprüche 1 bis 11, **dadurch gekennzeichnet, dass** das Mikrogel (B) durch funktionelle, gegenüber C=C-Doppelbindungen reaktive Gruppen modifiziert ist.

13. Verfahren nach einem der Ansprüche 1 bis 12, worin das vernetzbare, organische Medium (A) über Heteroatome-enthaltende funktionelle Gruppen oder C=C-Gruppen vernetzbar ist.

14. Verfahren nach einem der Ansprüche 1 bis 13, die 1 bis 60 Gew.-% des Mikrogels (B), bezogen auf die Gesamtmenge der Zusammensetzung enthält.

15. Verfahren nach einem der Ansprüche 1 bis 14, **dadurch gekennzeichnet, dass** die Zusammensetzung 10 bis 99 Gew.-% des vernetzbaren, organischen Mediums (A) bezogen auf die Gesamtmenge der Zusammensetzung enthält.

16. Verfahren nach einem der Ansprüchen 1 bis 15, **dadurch gekennzeichnet, dass** die Zusammensetzung zusätzlich Füllstoffe und Additive enthält.

17. Verfahren nach einem der Ansprüche 1 bis 16, **dadurch gekennzeichnet, dass** die Zusammensetzung durch Mischen des vernetzbaren Mediums (A) und des Mikrogels (B) mittels eines Homogenisators, einer Perlmühle, einer Dreiwalze, einer Ein- oder Mehrwellen-Extruderschnecke, eines Kneters und/oder eines Dissolvers hergestellt worden ist.

18. Verfahren Zusammensetzung nach Anspruch 17, **dadurch gekennzeichnet, dass** die Zusammensetzung mittels eines Homogenisators, einer Perlmühle oder einer Dreiwalze hergestellt worden ist.

19. Verfahren nach einem der Ansprüche 1 bis 18, **dadurch gekennzeichnet, dass** die Zusammensetzung eine Viskosität von 25 mPas bis zu 20000000 mPas bei einer Drehzahl von 5 s$^{-1}$, bestimmt mit einem Kegel-Platte-Meßsystem nach DIN 53018, bei 20°C aufweist.

20. Verfahren nach einem der Ansprüche 1 bis 19, **dadurch gekennzeichnet, daß** das Mikrogel (B) einen Quellungsindex in Toluol bei
23 °C von weniger als etwa 80 besitzt.

21. Verfahren nach einem der Ansprüche 1 bis 20, **dadurch gekennzeichnet, daß** das Mikrogel mit Hydroxylgruppen modifiziert ist.

22. Verfahren nach einem der Ansprüche 1 bis 21, **dadurch gekennzeichnet, daß** das vernetzbare Medium zumindest ein Polyol, bevorzugt ein Diol, oder eine Mischung davon ist.

23. Verfahren nach Anspruch 1, worin das vernetzbare, organische Medium (A) zumindest ein Polyol, bevorzugt ein Diol, oder eine Mischung davon und das Vernetzungsmittel (C) zumindest ein Polyisocyanat, bevorzugt ein Diisocyanat, oder eine Mischung davon ist.

24. Verfahren nach Anspruch 1 oder 22, worin die Komponenten (A) und (B) mittels eines Homogenisators, einer Perlmühle, einer Dreiwalze, einer Ein- oder Mehrwellen-Extruderschnecke, eines Kneters und/ oder eines Dissolvers gemischt werden.

25. Polymer-Zusammensetzung erhältlich nach einem der Ansprüche 1 bis 23.

**Claims**

1. Process for producing microgel-containing polymer compositions, which comprises mixing at least one crosslinkable organic medium (A), which at a temperature of 120°C has a viscosity of less than 30 000 mPas, and at least one microgel (B) which is not crosslinked by electromagnetic radiation with a wavelength of less than 0.1 pm, and **characterized in that** the primary particles of the microgel (B) have an average particle size of less than 99 nm and **in that** the microgels (B) have fractions insoluble in toluene at 23°C of at least 90% by weight, to give a composition comprising (A) and (B), subsequently adding a crosslinking agent (C) for the crosslinkable medium (A), and subsequently crosslinking the composition.

2. Process according to Claim 1, wherein the crosslinkable organic medium (A) has a viscosity of less than 10 000 mPas at a temperature of 120°C.

3. Process according to Claim 1, wherein the crosslinkable organic medium (A) has a viscosity of less than 1000 mPas at a temperature of 120°C.

4. Process according to any of Claims 1 to 3, **characterized in that** the primary particles of the microgel (B) have an approximately spherical geometry.

5. Process according to Claim 1 or 4, **characterized in that** the deviation in the diameters of a single primary particle of the microgel (B), defined as

$$[(d1 - d2)/d2] \times 100,$$

wherein d1 and d2 are two arbitrary diameters of the primary particle and d1 > d2, is less than 250%.

6. Process according to any of Claims 1 to 5, **characterized in that** the microgels (B) have a swelling index of less than about 80 in toluene at 23°C.

7. Process according to any of Claims 1 to 6, **characterized in that** the microgels (B) have a glass transition temperatures of -100°C to +120°C.

8. Process according to any of Claims 1 to 7, **characterized in that** the microgels (B) have a width of the glass transition range of greater than about 5°C.

9. Process according to any of Claims 1 to 8, **characterized in that** the microgels (B) are obtainable by emulsion polymerization.

10. Process according to any of Claims 1 to 9, **characterized in that** the microgel (B) is based on rubber.

11. Process according to any of Claims 1 to 10, **characterized in that** the microgel (B) is based on homopolymers or random copolymers.

12. Process according to any of Claims 1 to 11, **characterized in that** the microgel (B) is modified by functional groups that are reactive towards C=C double bonds.

13. Process according to any of Claims 1 to 12, wherein the crosslinkable organic medium (A) is crosslinkable via heteroatom-containing functional groups or C=C groups.

14. Process according to any of Claims 1 to 13, which comprises 1 to 60% by weight of the microgel (B), based on the total amount of the composition.

15. Process according to any of Claims 1 to 14, **characterized in that** the composition comprises 10 to 99% by weight of the crosslinkable organic medium (A), based on the total amount of the composition.

16. Process according to any of Claims 1 to 15, **characterized in that** the composition additionally comprises fillers and additives.

**17.** Process according to any of Claims 1 to 16, **characterized in that** the composition has been produced by mixing the crosslinkable medium (A) and the microgel (B) by means of a homogenizer, a bead mill, a three-roll mill, a single-shaft or multishaft extruder screw, a kneader and/or a dissolver.

**18.** Process according to Claim 17, **characterized in that** the composition has been produced by means of a homogenizer, a bead mill or a three-roll mill.

**19.** Process according to any of Claims 1 to 18, **characterized in that** the composition has a viscosity of 25 mPas up to 20,000,000 mPas at a rotary speed of 5 s$^{-1}$, determined with a cone/plate measuring system in accordance with DIN 53018, at 20°C.

**20.** Process according to any of Claims 1 to 19, **characterized in that** the microgel (B) possesses a swelling index of less than about 80 in toluene at 23°C.

**21.** Process according to any of Claims 1 to 20, **characterized in that** the microgel is modified with hydroxyl groups.

**22.** Process according to any of Claims 1 to 21, **characterized in that** the crosslinkable medium is at least one polyol, preferably a diol, or a mixture thereof.

**23.** Process according to Claim 1, wherein the crosslinkable organic medium (A) is at least one polyol, preferably a diol, or a mixture thereof and the crosslinking agent (C) is at least one polyisocyanate, preferably a diisocyanate, or a mixture thereof.

**24.** Process according to Claim 1 or 22, wherein the components (A) and (B) are mixed by means of a homogenizer, a bead mill, a three-roll mill, a single-shaft or multishaft extruder screw, a kneader and/or a dissolver.

**25.** Polymer composition obtainable according to any of Claims 1 to 23.


**Revendications**

**1.** Procédé de fabrication de compositions polymères contenant un microgel, qui comprend le mélange d'au moins un milieu organique réticulable (A), qui présente à une température de 120 °C une viscosité inférieure à 30 000 mPas, et d'au moins un microgel (B), qui n'est pas réticulé par un rayonnement électromagnétique d'une longueur d'onde inférieure à 0,1 pm, et **caractérisé en ce que** les particules primaires du microgel (B) présentent une taille de particule moyenne inférieure à 99 nm et **en ce que** les microgels (B) comprennent au moins 90 % en poids de fractions insolubles dans le toluène à 23 °C, pour former une composition contenant (A) et (B), l'ajout ultérieur d'un agent de réticulation (C) pour le milieu réticulable (A) et la réticulation ultérieure de la composition.

**2.** Procédé selon la revendication 1, dans lequel le milieu organique réticulable (A) présente à une température de 120 °C une viscosité inférieure à 10 000 mPas.

**3.** Procédé selon la revendication 1, dans lequel le milieu organique réticulable (A) présente à une température de 120 °C une viscosité inférieure à 1 000 mPas.

**4.** Procédé selon l'une quelconque des revendications 1 à 3, **caractérisé en ce que** les particules primaires du microgel (B) présentent une géométrie presque sphérique.

**5.** Procédé selon la revendication 1 ou 4, **caractérisé en ce que** la déviation du diamètre d'une particule primaire individuelle du microgel (B), définie par

$$[(d1-d2)/d2] \times 100$$

d1 et d2 étant deux diamètres quelconques de la particule primaire et d1 > d2, est inférieure à 250 %.

**6.** Procédé selon l'une quelconque des revendications 1 à 5, **caractérisé en ce que** les microgels (B) présentent un indice de gonflement inférieur à environ 80 dans le toluène à 23 °C.

7. Procédé selon l'une quelconque des revendications 1 à 6, **caractérisé en ce que** les microgels (B) présentent des températures de transition vitreuse de -100 °C à +120 °C.

8. Procédé selon l'une quelconque des revendications 1 à 7, **caractérisé en ce que** les microgels (B) présentent une largeur de la plage de transition vitreuse supérieure à environ 5 °C.

9. Procédé selon l'une quelconque des revendications 1 à 8, **caractérisé en ce que** les microgels (B) peuvent être obtenus par polymérisation en émulsion.

10. Procédé selon l'une quelconque des revendications 1 à 9, **caractérisé en ce que** le microgel (B) est à base de caoutchouc.

11. Procédé selon l'une quelconque des revendications 1 à 10, **caractérisé en ce que** le microgel (B) est à base d'homopolymères ou de copolymères statistiques.

12. Procédé selon l'une quelconque des revendications 1 à 11, **caractérisé en ce que** le microgel (B) est modifié par des groupes fonctionnels réactifs avec les doubles liaisons C=C.

13. Procédé selon l'une quelconque des revendications 1 à 12, dans lequel le milieu organique réticulable (A) peut être réticulé par des groupes fonctionnels contenant des hétéroatomes ou des groupes C=C.

14. Procédé selon l'une quelconque des revendications 1 à 13, qui contient 1 à 60 % en poids du microgel (B), par rapport à la quantité totale de la composition.

15. Procédé selon l'une quelconque des revendications 1 à 14, **caractérisé en ce que** la composition contient 10 à 99 % en poids du milieu organique réticulable (A) par rapport à la quantité totale de la composition.

16. Procédé selon l'une quelconque des revendications 1 à 15, **caractérisé en ce que** la composition contient en outre des charges et des additifs.

17. Procédé selon l'une quelconque des revendications 1 à 16, **caractérisé en ce que** la composition a été fabriquée par mélange du milieu réticulable (A) et du microgel (B) au moyen d'un homogénéisateur, d'un broyeur à billes, d'un broyeur à trois cylindres, d'une vis d'extrudeuse à un ou plusieurs arbres, d'un malaxeur et/ou d'un dissolveur.

18. Procédé selon la revendication 17, **caractérisé en ce que** la composition a été fabriquée au moyen d'un homogénéisateur, d'un broyeur à billes ou d'un broyeur à trois cylindres.

19. Procédé selon l'une quelconque des revendications 1 à 18, **caractérisé en ce que** la composition présente une viscosité de 25 mPas à 20 000 000 mPas à une vitesse de rotation de 5 s$^{-1}$, déterminée avec un système de mesure à cône et plan selon DIN 53018, à 20 °C.

20. Procédé selon l'une quelconque des revendications 1 à 19, **caractérisé en ce que** le microgel (B) présente un indice de gonflement dans le toluène à 23 °C inférieur à environ 80.

21. Procédé selon l'une quelconque des revendications 1 à 20, **caractérisé en ce que** le microgel est modifié avec des groupes hydroxyle.

22. Procédé selon l'une quelconque des revendications 1 à 21, **caractérisé en ce que** le milieu réticulable est au moins un polyol, de préférence un diol, ou un mélange de ceux-ci.

23. Procédé selon la revendication 1, dans lequel le milieu organique réticulable (A) est au moins un polyol, de préférence un diol, ou un mélange de ceux-ci, et l'agent de réticulation (C) est au moins un polyisocyanate, de préférence un diisocyanate, ou un mélange de ceux-ci.

24. Procédé selon la revendication 1 ou 22, dans lequel les composants (A) et (B) sont mélangés au moyen d'un homogénéisateur, d'un broyeur à billes, d'un broyeur à trois cylindres, d'une vis d'extrudeuse à un ou plusieurs arbres, d'un malaxeur et/ou d'un dissolveur.

**25.** Composition polymère pouvant être obtenue selon l'une quelconque des revendications 1 à 23.

Abb. 1

Funktionsweise des Homogenisierventils

Abb. 2

Abb. 3

Abb. 4

## Bruchspannungskurve

Abb. 5

## Verstärkung

Abb. 6

**Verstärkung**

- ◆ Spannung bei 50%
- ■ Spannung bei 100%
- ▲ Spannung bei 200%
- ✕ Spannung bei 300%

Abb. 7

**Härteverlauf**

Abb. 8

**Weiterreißfestigkeitskurve**

Abb. 9

Differentielle und integrale Teilchengrößenverteilung - erstellt von BIS-SUA-SPA

EP 1 664 158 B1

Abb. 10

| Bayer | Differentielle Teilchengrößenverteilung | Labor Dr. H.G. Müller BIS-SUA-SPA (0214) 30-71102 |

**Auftraggeber** Dr. Obrecht
**Abteilung** BPO-IN-WS-PPV
**Substanz** Latex

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4220563
- GB S1078400 A
- EP 405216 A
- EP 854171 A
- EP 0953615 A2
- EP 0953615 A3
- US 20030088036 A1
- EP 1262510 A1
- DE 2910153
- DE 2910168
- DE 3742180 A
- EP 1279702 A1
- US 5229434 A
- US 6423760 B1
- US 4268547 A
- US 4115472 A
- US 4055607 A
- US 4025474 A
- DE 4220563 A
- DE 19701489
- DE 19701488
- DE 19834804
- DE 19834803
- DE 19834802
- DE 19929347
- DE 19939865
- DE 19942620
- DE 19942614
- DE 10021070
- DE 10038488
- DE 10039749
- DE 10052287
- DE 10056311
- DE 10061174
- US 5302696 A
- US 5442009 A
- US S2187146 A
- DE 10345043
- US 5013793 A
- US 6399706 B

**In der Beschreibung aufgeführte Nicht-Patentliteratur**

- *Chinese Journal of Polymer Science,* 2002, vol. 20 (2), 93-98
- **P. PÖTSCHKE et al.** *Kautschuk Gummi Kunststoffe,* 1997, vol. 50 (11), 787
- **RÖMPP LEXIKON.** Lacke und Druckfarben. Georg Thieme Verlag, 1998
- Makromoleküle. **H.G. ELIAS.** Technologie. 1992, vol. 2, 99
- **HOUBEN-WEYL.** *Methoden der organischen Chemie,* vol. 14 (2), 848
- **W. SCHOLTAN ; H. LANGE.** Bestimmung der Teilchengrößenverteilung von Latices mit der Ultrazentrifuge. *Kolloid-Zeitschrift und Zeitschrift für Polymere,* 1972, vol. 250